# EUROPEAN PATENT APPLICATION

(11) **EP 4 617 865 A1**
(43) Date of publication of application: **17.09.2025**
(21) Application number: 23899507.0
(22) Date of filing: 05.09.2023
(51) Int. Cl.: G06F 9/445

(54) **PROCESS MIGRATION METHOD, APPARATUS AND SYSTEM**

(30) Priority: 05.12.2022 CN 202211551525; 24.02.2023 CN 202310207261
(71) Applicant: Huawei Technologies Co., Ltd., Shenzhen, Guangdong 518129 (CN)
(72) Inventor: ZHAO, Dawei, Shenzhen, Guangdong 518129 (CN); ZHOU, Ziqin, Shenzhen, Guangdong 518129 (CN); LI, Zhebin, Shenzhen, Guangdong 518129 (CN)
(74) Representative: Pfenning, Meinig & Partner mbB
(86) International application number: PCT/CN2023/116988
(87) International publication number: WO 2024/119924

(57) **Abstract**

This application discloses a process migration method, apparatus, and system, and relates to the field of computer technologies. The method is applied to a source host running a to-be-migrated process, and the to-be-migrated process needs to be migrated to a destination host. The method includes: The source host copies a memory page of the to-be-migrated process to storage space of a first component of the source host in response to a received first migration indication; the source host sends the memory page of the to-be-migrated process to the destination host via a remote access module of the first component; and the destination host restores the to-be-migrated process based on the received memory page of the to-be-migrated process, to implement live migration of the to-be-migrated process. The remote access module is configured to perform data access on a remote host. The method can shorten a time needed for process migration, and shorten a time for suspending data/service processing in a process during process migration, so that stalling phenomena occurring when a user uses the process are reduced, thereby improving user experience.

## Description

This application claims priorities to Chinese Patent Application No. 202211551525.5, filed with the National Intellectual Property Administration on December 5, 2022 and entitled "CONTAINER LIVE MIGRATION BASED METHOD", and to Chinese Patent Application No. 202310207261.X, filed with the National Intellectual Property Administration on February 24, 2023 and entitled "PROCESS MIGRATION METHOD, APPARATUS, AND SYSTEM", both of which are incorporated herein by reference in their entireties.

### TECHNICAL FIELD

This application relates to the field of computer technologies, and in particular, to a process migration method, apparatus, and system.

### BACKGROUND

With rapid development of container technologies, there are increasing requirements for container functions. Cloud providers urgently expect that containers can have enterprise-level features such as load balancing, disaster recovery, and high availability, like other virtualization products (such as virtual machines). To meet these requirements, containers and applications running in the containers need to be live migrated across hosts based on requirements. Live migration of a container may also be referred to as real-time migration of the container, and refers to storage and restoration of the container. To be specific, a running status of the container is stored, and then the container is restored on a same hardware platform or different hardware platforms, where a resource and a running status of a restored container are consistent with those of the original container. In this way, there is no difference for a user who uses the container.

Current container live migration technologies are usually proposed based on a CRIU technology. In this technology, a destination host needs to temporarily store, by using a memory file system, memory pages of a to-be-migrated container that are sent by a source host running the to-be-migrated container, and then the destination host reads these memory pages from the memory file system and writes these memory pages into a virtual address space of a to-be-restored container, to restore, on the destination host, a container that is the same as the to-be-migrated container in the source host.

However, overheads of reading the memory pages from the memory file system/writing the memory pages by the host are high. Consequently, when the destination host restores the container, the container suspends service processing for a long time, resulting in a stalling phenomenon occurring when a user uses the container, and affecting user experience.

### SUMMARY

This application provides a process migration method, apparatus, and system, to shorten a time needed for process migration, and shorten a time for suspending data/service processing in a process during process migration, so that stalling phenomena occurring when a user uses the process are reduced, thereby improving user experience.

To achieve the foregoing objective, this application provides the following technical solutions.

According to a first aspect, this application provides a process migration method. The method is applied to a source host running a to-be-migrated process, the source host includes a first component provided with a remote access module, and the remote access module is configured to perform data access on a remote host. The method includes: receiving a first migration indication, where the first migration indication indicates to migrate the to-be-migrated process to a destination host; copying a memory page of the to-be-migrated process to storage space of the first component in response to the first migration indication; and sending the memory page of the to-be-migrated process to the destination host via the remote access module of the first component, where the memory page of the to-be-migrated process is used to restore the to-be-migrated process on the destination host.

According to the method provided in this application, the source host first copies the memory page of the to-be-migrated process to the storage space of the first component provided with the remote access module. Because the remote access module can directly perform data access on the remote host, the source host may directly store the memory page of the to-be-migrated process in a cache of the destination host by using the remote storage module configured for the first component. The destination host does not need to temporarily store, by using a file system, the memory page that is of the to-be-migrated process and that is transmitted by the source host. Therefore, the destination host does not need to spend a large amount of time in reading the memory page from the file system and restoring the to-be-migrated process based on the read memory page. In this way, the method can shorten a time needed for process migration, and shorten a time for suspending data/service processing in a process during process migration, so that stalling phenomena occurring when a user uses the process are reduced, thereby improving user experience.

In a possible design manner, copying the memory page of the to-be-migrated process to the storage space of the first component includes: copying the memory page of the to-be-migrated process to the storage space of the first component based on a mapping relationship between a virtual address of a memory of the to-be-migrated process and the storage space of the first component.

In another possible design manner, before copying the memory page of the to-be-migrated process to the storage space of the first component, the method further includes: establishing the mapping relationship between the virtual address of the memory of the to-be-migrated process and the storage space of the first component based on parasitic code implanted in the to-be-migrated process; or establishing the mapping relationship between the virtual address of the memory of the to-be-migrated process and the storage space of the first component via a process memory management module configured in the source host, where the process memory management module is configured to manage a memory of a process that runs on the source host.

In the foregoing two possible implementations, the mapping relationship can be established between the virtual address of the memory of the to-be-migrated process and the storage space of the first component, so that the memory page of the to-be-migrated process can be copied to the storage space of the first component based on the mapping relationship.

In addition, when the source host is provided with the process memory management module, because the process memory management module is usually configured in a kernel of an operating system of the host, the process memory management module of the source host may directly operate the memory of the to-be-migrated process. When copying the memory page of the to-be-migrated process via the process memory management module, the source host does not need to freeze the to-be-migrated process. In this way, the memory page of the to-be-migrated process is copied by using the memory management module during process migration, so that the user is completely unaware of the process migration.

In another possible design manner, sending the memory page of the to-be-migrated process to the destination host via the remote access module of the first component includes: generating a remote access packet via the remote access module of the first component, where the remote access packet carries at least one memory page copied to the first component and a target virtual address of each of the at least one memory page in a memory of the to-be-migrated process; and sending the generated remote access packet to the destination host via the remote access module of the first component.

According to this possible design, the source host may directly store the memory page of the to-be-migrated process in the cache of the destination host by using the remote storage module configured for the first component.

In another possible design manner, when the to-be-migrated process includes a plurality of processes, the generated remote access packet further includes a process identifier (identifier, ID) of a process to which each of the at least one memory page belongs.

According to this possible design, the method provided in this application may be further used for simultaneously migrating the plurality of processes. In addition, when a remote access packet carries a memory page and a process ID of a process to which the memory page belongs, the destination host can write the memory page into a memory of a target process in the destination host based on the memory page carried in the received remote access packet and the process ID that is of the process to which the memory page belongs and that is carried in the received remote access packet. A process ID of the target process is the same as the process ID that is of the process to which the memory page belongs and that is carried in the remote access packet.

In another possible design manner, the to-be-migrated process includes a plurality of processes, and the plurality of processes may be a process group for implementing a to-be-migrated container.

According to this possible design, the method provided in this application may be further used for container migration.

In another possible design manner, before copying the memory page of the to-be-migrated process to the first component, the method further includes: obtaining a process tree structure of the to-be-migrated container; and sending the process tree structure to the destination host. Optionally, when there are a plurality of copy operations, before each copy operation, the source host may obtain a process tree structure of the to-be-migrated container at a current moment, and send the obtained process tree structure to the destination host.

According to this possible design, it can be ensured that a process group structure of a to-be-restored container in the destination host is exactly the same as a process group structure that is of the to-be-migrated container and that may change when the container runs normally in a migration process. Therefore, after the method provided in this application is performed, the to-be-restored container that is exactly the same as the to-be-migrated container can be obtained in the destination host when the user is unaware of the process migration. This implements live migration of the container.

In another possible design manner, the method further includes: collecting running status information of the to-be-migrated process; and sending, via the first component, a packet including the running status information to the destination host, where the running status information is used to set a running status of the migrated process. Optionally, the method in this possible design may be performed when the source host performs a copy operation for the last time.

According to this possible design, a status of the to-be-restored container may be completely restored to a status of the to-be-migrated container during the last copy operation, so that the to-be-restored container that is exactly the same as the to-be-migrated container can be obtained on the destination host side.

In another possible design manner, copying the memory page of the to-be-migrated process to the first component includes: copying the memory page of the to-be-migrated process to the first component through a plurality of times of iterative copying. When a copy operation is performed for the first time, all memory pages of the to-be-migrated process are copied to the first component. For any copy operation other than the 1^{st} copy operation, a dirty memory page generated by the to-be-migrated process during an interval is copied to the first component. Herein, the interval is a time interval from execution of a previous copy operation of a current copy operation to execution of the current copy operation.

According to this possible design, the to-be-migrated process can be migrated in a manner of incrementally copying the memory page of the to-be-migrated process. In this way, when the operating system of the source host is not modified (that is, when the source host is not provided with the process memory management module), incremental copying can reduce a time needed to freeze the to-be-migrated process in a process of copying the memory page. This shortens a time for suspending data/service processing in a process during process migration, so that stalling phenomena occurring when the user uses the process are reduced, thereby improving user experience.

In another possible design manner, for any copy operation other than the 1^{st} copy operation, before copying the memory page of the to-be-migrated process to the first component, the method further includes: determining, based on a dirty page flag (for example, soft-dirty) of each memory page of the to-be-migrated process, the dirty memory page generated by the to-be-migrated process during the interval; or determining, via the process memory management module configured in the source host, the dirty memory page generated by the to-be-migrated process during the interval.

According to this possible design, the dirty memory page generated by the to-be-migrated process during the interval between two copy operations can be quickly determined, to incrementally copy the memory page of the to-be-migrated process.

In another possible design manner, the method further includes: when a quantity of dirty memory pages copied this time is less than or equal to a first threshold, or a quantity of times of iterative copy operations on the memory page of the to-be-migrated process is greater than or equal to a second threshold, determining to stop performing an iterative copy operation. In other words, it is determined that the current copy operation is the last copy operation performed on the memory page of the to-be-migrated process.

According to this possible design manner, a lower first threshold or a higher second threshold indicates that a small quantity of memory pages or dirty memory pages need to be copied when the source host performs the copy operation on the memory page of the to-be-migrated process for the last time. In this way, a time needed to restore the to-be-migrated process on the destination host side for the last time (that is, a time for writing a received memory page copied by the source host through the last copy operation into a memory of the to-be-restored process) is short. This shortens a time for suspending data/service processing in a process during process migration, so that stalling phenomena occurring when the user uses the process are reduced, thereby improving user experience.

In another possible design manner, a destination address of the remote access packet is a pre-obtained address of a receiving buffer (buffer) in the destination host. Optionally, the receiving buffer of the destination host is all or a part of storage space of a second component of the destination host.

In another possible design manner, the receiving the first migration indication includes: receiving the first migration indication entered by a user; or receiving the first migration indication sent by a management node in a cluster system in which the source host is located.

In another possible design manner, when the first migration indication is a migration indication entered by the user, after the receiving the first migration indication, the method further includes: determining the destination host based on the first migration indication, and sending, to the destination host, a second migration indication that carries identification information of the source host.

The foregoing two possible designs indicate that application scenarios of the method in this application are diversified.

In another possible design manner, the remote access module is a module that supports a remote direct memory access (remote direct memory access, RDMA) function.

In another possible design manner, the first component provided with the remote access module is a network interface card or a data processing unit (data processing unit, DPU) having an RDMA function.

The foregoing two possible designs indicate that the method in this application is easy to implement.

According to a second aspect, this application provides a process migration method. The method is applied to a destination host including a second component, the second component is provided with a remote access module, and the remote access module is configured to perform data access on a remote host. The method includes: receiving a second migration indication, where the second migration indication indicates to migrate a to-be-migrated process running on a source host to the destination host; creating, based on the second migration indication, a to-be-restored process whose resource parameter is the same as a resource parameter of the to-be-migrated process; receiving, via the remote access module of the second component, a memory page that is of the to-be-migrated process and that is sent by the source host; and writing the received memory page of the to-be-migrated process into a memory of the to-be-restored process, to restore the to-be-migrated process.

According to the method provided in this application, the remote access module of the destination host may directly write the received memory page into a cache of the destination host, and write a memory page in the cache into the memory of the to-be-restored process that is created based on the second migration indication. Because the resource parameter of the to-be-restored process is the same as the resource parameter of the to-be-migrated process, after the memory page of the to-be-migrated process is written into a memory of a to-be-restored container, a to-be-migrated container can be migrated. Compared with a solution in which a destination host temporarily stores, by using a file system, memory pages of a to-be-migrated process that are transmitted by a source host, and spends a large amount of time in reading these memory pages from the file system and migrating the to-be-migrated process based on the read memory pages, the method in this application can shorten a time needed for process migration, and shorten a time for suspending data/service processing in a process during process migration, so that stalling phenomena occurring when a user uses the process are reduced, thereby improving user experience.

In a possible design manner, receiving, via the remote access module of the second component, the memory page that is of the to-be-migrated process and that is sent by the source host includes: receiving, via the remote access module of the second component, at least one remote access packet sent by the source host, where each remote access packet received by the destination host carries at least one memory page of the to-be-migrated process and a target virtual address of each of the at least one memory page in a memory of the to-be-migrated process.

In another possible design manner, for a first remote access packet received by the destination host via the remote access module of the second component (that is, any remote access packet received by the destination host via the remote access module of the second component), writing the memory page of the to-be-migrated process into the memory of the to-be-restored process includes: writing a memory page carried in the first remote access packet into a target virtual address carried in the first remote access packet.

In another possible design manner, the destination host includes a mapping relationship set, and the mapping relationship set includes a mapping relationship between a physical address and a virtual address that are used to store a memory page of the to-be-restored process. Writing the memory page carried in the first remote access packet into the target virtual address carried in the first remote access packet includes: querying the mapping relationship set, to determine whether a target physical address that has a mapping relationship with each target virtual address carried in the first remote access packet exists; and when it is determined that the target physical address exists, writing the memory page carried in the first remote access packet into the corresponding target physical address, to update a memory page originally stored in the target physical address.

In another possible design manner, the method further includes: when it is determined that the target physical address does not exist, writing the memory page carried in the first remote access packet into a first physical address, where the first physical address is a physical address in a memory of the destination host; and recording, in the mapping relationship set, a mapping relationship between the target virtual address carried in the first remote access packet and the first physical address.

In the foregoing several possible designs, the memory page that is of the to-be-migrated process and that is received from the source host can be written into the memory of the to-be-restored process.

In another possible design manner, when the to-be-migrated process includes a plurality of processes, the to-be-restored process includes a process that has a same process ID as each of the plurality of processes, and each remote access packet further carries a process ID of a process to which each of the at least one memory page belongs; and for a first process in the to-be-restored process, the mapping relationship set specifically includes a process ID of the first process and a mapping relationship between a virtual address and a physical address that are used to store a memory page of the first process.

According to this possible design, the method provided in this application may be further used for simultaneously migrating the plurality of processes. In addition, when a remote access packet carries a memory page and a process ID of a process to which the memory page belongs, the destination host can write the memory page into a memory of a target process in the destination host based on the memory page carried in the received remote access packet and the process ID that is of the process to which the memory page belongs and that is carried in the received remote access packet. A process ID of the target process is the same as the process ID that is of the process to which the memory page belongs and that is carried in the remote access packet.

In another possible design manner, if the to-be-migrated process includes a plurality of processes, and the plurality of processes may be a process group for implementing a to-be-migrated container, the to-be-restored process is a process group of a to-be-restored container.

According to this possible design, the method provided in this application may be further used for container migration.

In another possible design manner, the method further includes: receiving a process tree structure that is of the to-be-migrated container and that is sent by the source host; and based on the received process tree structure, adjusting a process group structure of the to-be-restored container, and updating the mapping relationship set. Optionally, the destination host may receive, for a plurality of times, process tree structures of the to-be-migrated container that are sent by the source host.

According to this possible design, it can be ensured that the process group structure of the to-be-restored container in the destination host is exactly the same as a process group structure that is of the to-be-migrated container and that may change when the container runs normally in a migration process. Therefore, after the method provided in this application is performed, the to-be-restored container that is exactly the same as the to-be-migrated container can be obtained in the destination host when the user is unaware of the process migration. This implements live migration of the container.

In another possible design manner, the method further includes: receiving, via the second component, a packet that includes running status information of the to-be-migrated process and that is sent by the source host, where the running status information is used to set a running status of the to-be-restored process. Optionally, the running status information received by the destination host may be running status information of the to-be-migrated process when the source host performs a copy operation for the last time.

According to this possible design, a status of the to-be-restored container may be completely restored to a status of the to-be-migrated container during the last copy operation, so that the to-be-restored container that is exactly the same as the to-be-migrated container can be obtained on the destination host side.

In another possible design manner, the receiving the second migration indication includes: receiving the second migration indication sent by the source host; or receiving the second migration indication sent by a management node in a cluster system in which the destination host is located.

The foregoing two possible designs indicate that application scenarios of the method in this application are diversified.

According to a third aspect, this application provides a process migration apparatus.

In a possible design manner, the migration apparatus is configured to perform any method provided in the first aspect. In this application, the migration apparatus may be divided into functional modules according to the any method provided in the first aspect. For example, functional modules may be obtained through division in correspondence to functions, or at least two functions may be integrated into one processing module. For example, in this application, the migration apparatus may be divided into a receiving unit, a copying unit, a sending unit, and the like based on functions. For descriptions of possible technical solutions performed by the foregoing functional modules obtained through division and beneficial effects, refer to the technical solutions provided in the first aspect or the corresponding possible designs of the first aspect. Details are not described herein again.

In another possible design manner, the migration apparatus is configured to perform any method provided in the second aspect. In this application, the migration apparatus may be divided into functional modules according to the any method provided in the second aspect. For example, functional modules may be obtained through division in correspondence to functions, or at least two functions may be integrated into one processing module. For example, in this application, the migration apparatus may be divided into a receiving unit, a creation unit, a writing unit, and the like based on functions. For descriptions of possible technical solutions performed by the foregoing functional modules obtained through division and beneficial effects, refer to the technical solutions provided in the second aspect or the corresponding possible designs of the second aspect. Details are not described herein again.

In another possible design, the migration apparatus includes a storage and one or more processors. The one or more processors are configured to read program instructions stored in the storage, to perform any method provided in any one of the first aspect and the possible design manners of the first aspect, or perform any method provided in any one of the second aspect and the possible design manners of the second aspect.

According to a fourth aspect, this application provides a process migration system. The migration system includes a source host and a destination host, and a to-be-migrated process runs on the source host. The source host is configured to perform any method provided in any one of the first aspect and the possible design manners of the first aspect, and the destination host is configured to perform any method provided in any one of the second aspect and the possible design manners of the second aspect, to migrate the to-be-migrated process from the source host to the destination host.

According to a fifth aspect, this application provides a computer-readable storage medium. The computer-readable storage medium includes program instructions. When the program instructions are run on a computer or a processor, the computer or the processor is enabled to perform any method provided in any possible implementation of the first aspect or any possible implementation of the second aspect.

According to a sixth aspect, this application provides a computer program product. When the computer program product runs on a malicious domain name determining apparatus, any method provided in any possible implementation of the first aspect or any possible implementation of the second aspect is performed.

It can be understood that any apparatus, system, computer storage medium, computer program product, or the like provided above may be used to perform the corresponding methods provided above. Therefore, for beneficial effects that can be achieved by the apparatus, system, computer storage medium, computer program product, or the like, refer to the beneficial effects in the corresponding methods. Details are not described herein again.

In this application, names of the migration apparatus and the migration system do not constitute any limitation on devices or functional modules. In actual application, these devices or functional modules may have other names and fall within the scope of the claims and equivalent technologies of this application, provided that functions of the devices or functional modules are similar to those in this application.

### BRIEF DESCRIPTION OF DRAWINGS

FIG. 1 is a diagram of a migration system according to an embodiment of this application;
FIG. 2 is a diagram of another migration system according to an embodiment of this application;
FIG. 3 is a diagram of a hardware structure of a computing device according to an embodiment of this application;
FIG. 4 is a schematic flowchart of a process migration method according to an embodiment of this application;
FIG. 5 is a flowchart of an operation process in which a destination host writes a received memory page into a memory of a to-be-restored process according to an embodiment of this application;
FIG. 6 is a schematic flowchart of another process migration method according to an embodiment of this application;
FIG. 7 is a schematic flowchart of still another process migration method according to an embodiment of this application;
FIG. 8 is a diagram of a structure of a process migration apparatus according to an embodiment of this application; and
FIG. 9 is a diagram of a structure of another process migration apparatus according to an embodiment of this application.

### DESCRIPTION OF EMBODIMENTS

For clearer understanding of embodiments of this application, the following describes some terms or technologies used in embodiments of this application.

### (1) Container

A container is a process or process group running on a host. The container may be used to provide a running environment for an application process, or may be used to run an application instance.

Generally, containers may be classified into a common container and a secure container. The common container may directly run on the host, and the secure container runs in a virtual machine created by the host.

### (2) Other terms

In embodiments of this application, terms "first" and "second" do not represent a sequence relationship, but are intended to distinguish between different objects. "First", "second", and the like mentioned in the following documents are also intended to distinguish between different packets and the like, and should not be understood as an indication or an implication of relative importance or an implication of a quantity of indicated technical features.

It should also be understood that sequence numbers of processes do not mean execution sequences in embodiments of this application. The execution sequences of the processes should be determined based on functions and internal logic of the processes, and should not be construed as any limitation on the implementation processes of embodiments of this application.

An embodiment of this application provides a process migration method. For a to-be-migrated process running on a source host, when the process needs to be migrated to a destination host, a to-be-restored process that has a same resource parameter as the to-be-migrated process is first created by the destination host in the method provided in this embodiment of this application. Then, the source host sends a memory page of the to-be-migrated process to the destination host by using a first component provided with a remote access module, and the destination host writes the memory page into a memory of the to-be-restored process, to implement live migration of the to-be-migrated process.

According to the method, the destination host does not need to temporarily store, by using a file system, the memory page that is of the to-be-migrated process and that is transmitted by the source host. Therefore, the destination host does not need to spend a large amount of time in reading the memory page from the file system and restoring the to-be-migrated process based on the read memory page. In this way, the method provided in this embodiment of this application can shorten a time needed for process migration, and shorten a time for suspending data/service processing in a process during process migration, so that stalling phenomena occurring when a user uses the process are reduced, thereby improving user experience.

The to-be-migrated process may be any process that needs to be migrated, or any process group that needs to be migrated. For example, the to-be-migrated process may be a process whose hardware resources are about to be exhausted, a process that runs on the source host when an abnormal alarm occurs on the source host, or a process in which a user needs to change a running host from the source host to the destination host. This is not limited thereto.

Optionally, the to-be-migrated process may be a single process or a process group used to implement a container, or a single process or a process group used to implement a virtual machine running on a host. This is not limited herein. It should be understood that, when the to-be-migrated process is a process or a process group used to implement a container, the container may be referred to as a to-be-migrated container. The to-be-migrated container may be a secure container, or may be a common container. This is not limited herein. Similarly, when the to-be-migrated process is a process or a process group used to implement a virtual machine running on a host, the virtual machine may be referred to as a to-be-migrated virtual machine.

An embodiment of this application further provides a process migration system. The process migration methods provided in embodiments of this application are applied to the system. The migration system includes a source host and a destination host, and the source host and the destination host may communicate with each other in a wired or wireless manner. A to-be-migrated process runs on the source host, and the to-be-migrated process is a process that is in the source host and that needs to be migrated to the destination host that communicates with the source host.

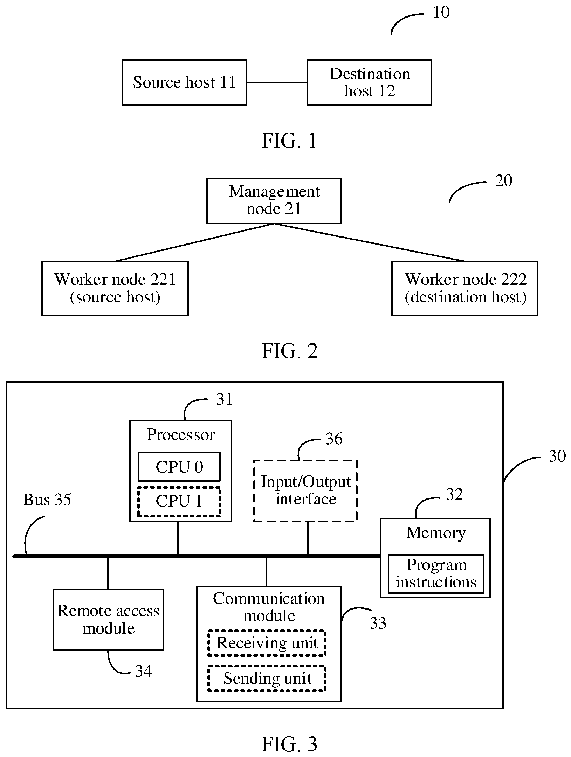

In an example, FIG. 1 is a diagram of a migration system according to an embodiment of this application. As shown in FIG. 1, the migration system 10 includes a source host 11 and a destination host 12, and the source host 11 and the destination host 12 communicate with each other in a wired or wireless manner. A to-be-migrated process runs on the source host 11, and the to-be-migrated process needs to be migrated to the destination host 12.

In another example, FIG. 2 is a diagram of another migration system according to an embodiment of this application. As shown in FIG. 2, the migration system 20 includes a source host, a destination host, and a management node 21. The source host and the destination host are two worker nodes in a cluster system managed by the management node 21. For example, the source host is a worker node 221 shown in FIG. 2, and the destination host is a worker node 222 shown in FIG. 2. The worker node 221 and the worker node 222 communicate with each other in a wired or wireless manner, and the management node 21 communicates with both the worker node 221 and the worker node 222, to monitor and manage the worker node 221 and the worker node 222. For example, when determining that a to-be-migrated process in the worker node 221 needs to be migrated to the worker node 222, the management node 21 may separately send a migration indication to the worker node 221 and the worker node 222, to indicate to migrate the to-be-migrated process from the worker node 221 to the worker node 222. For a detailed process, refer to descriptions in the following methods. Details are not described.

It should be understood that the cluster system managed by the management node 21 shown in FIG. 2 may further include more worker nodes (not shown in FIG. 2). In an example, when the to-be-migrated process running on the worker node 221 serving as the source host is a process for implementing a to-be-migrated container, the cluster system managed by the management node 21 may be a container cluster system implemented by using K8s. This is not limited herein.

It should also be understood that the management node 21 may be an independent node device in the cluster system managed by the management node 21, or may be a functional module in one or more worker nodes in a GIA cluster management system. This is not limited herein.

An embodiment of this application further provides a process migration apparatus. The migration apparatus is used for the source host and the destination host that are described above, to perform the process migration methods provided in embodiments of this application.

Optionally, the migration apparatus may be the source host or the destination host described above, or a functional module in the source host or the destination host. This is not limited herein.

Optionally, each of the source host and the destination host that are described above may be any computing device having a data computing processing capability, and the computing device may be, for example, a general-purpose computer, a notebook computer, or a tablet computer. Alternatively, the computing device may be a server. This is not limited herein.

FIG. 3 is a diagram of a hardware structure of a computing device according to an embodiment of this application. As shown in FIG. 3, the computing device 30 includes a processor 31, a storage 32, a communication module 33, a remote access module 34, and a bus 35. The processor 31, the storage 32, the communication module 33, and the remote access module 34 are connected to each other through the bus 35. Optionally, the computing device 30 further includes an input/output interface 36. The input/output interface 36 communicates with the processor 31, the storage 32, the communication module 33, the remote access module 34, and the like through the bus 35.

The processor 31 is a control center of the computing device 30, and may be a general-purpose central processing unit (central processing unit, CPU). Alternatively, the processor 31 may be another general-purpose processor, a digital signal processor (digital signal processor, DSP), an application-specific integrated circuit (application-specific integrated circuit, ASIC), a field-programmable gate array (field-programmable gate array, FPGA), another programmable logic device, a discrete gate, a transistor logic device, a discrete hardware component, a graphics processing unit (graphics processing unit, GPU), a neural processing unit (neural processing unit, NPU), a tensor processing unit (tensor processing unit, TPU), an artificial intelligence (artificial intelligent) chip, a data processing unit (data processing unit, DPU), or the like.

In an example, the processor 31 may include one or more CPUs, for example, a CPU 0 and a CPU 1 shown in FIG. 3. In addition, a quantity of processor cores in each processor is not limited in this application.

The storage 32 is configured to store program instructions or data to be accessed by an application process. The processor 31 may execute the program instructions in the storage 32, to implement the process migration methods provided in embodiments of this application.

The storage 32 includes a volatile memory or a non-volatile memory, or may include both a volatile memory and a non-volatile memory. The volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The non-volatile memory may be a storage class memory (storage class memory, SCM), a solid state disk (solid state drive, SSD), a mechanical hard disk (hard disk drive, HDD), or the like. The storage class memory may be, for example, a non-volatile memory (non-volatile memory, NVM), a phase-change memory (phase-change memory, PCM), or a persistent memory.

In a possible implementation, the storage 32 is independent of the processor 31. The storage 32 is connected to the processor 31 through the bus 35, and is configured to store data, instructions, or program code. When invoking and executing the instructions or the program code stored in the storage 32, the processor 31 can implement the process migration methods provided in embodiments of this application.

In another possible implementation, the storage 32 is integrated with the processor 31.

The communication module 33 is configured to connect the computing device 30 to another device (for example, a source host, a destination host, or a management node) through a communication network, where the communication network may be an Ethernet, a radio access network (radio access network, RAN), a wireless local area network (wireless local area network, WLAN), or the like. The communication module 33 includes a receiving unit configured to receive data/a packet and a sending unit configured to send data/a packet.

The remote access module 34 is configured to perform data access on a remote host device, for example, write data into the remote host device, read data from the remote host device, or the like.

For ease of differentiation, in this embodiment of this application, when the computing device 30 is the source host described above, a component provided with the remote access module 34 in the computing device 30 serving as the source host is referred to as a first component. When the computing device 30 is the destination host described above, a component provided with the remote access module 34 in the computing device 30 serving as the destination host is referred to as a second component. In other words, the computing device 30 serving as the source host includes the first component, and the first component is provided with the remote access module 34. The computing device 30 serving as the destination host includes the second component, and the second component is provided with the remote access module 34.

Optionally, the component (for example, the first component or the second component) provided with the remote access module 34 in the computing device 30 may be a network interface card (network interface card, NIC) having a remote direct memory access (remote direct memory access, RDMA) function, which is referred to as a remote direct memory access network interface card (RDMA network interface card, RNIC) for short. In this case, the communication module 33 may also be an RNIC having an RDMA function. Certainly, the communication module 33 may be alternatively a common network interface card independent of the RNIC. In this case, the computing device 30 includes at least two network interface cards: an RNIC and a NIC. This is not limited herein.

Optionally, the component (for example, the first component or the second component) provided with the remote access module 34 in the computing device 30 may be a data processing unit (data processing unit, DPU) including an RNIC.

In addition, for ease of description, in the following embodiments of this application, a packet generated and sent via the remote access module 34 is referred to as a remote access packet.

The bus 35 may be an industry standard architecture (industry standard architecture, ISA) bus, a peripheral component interconnect (peripheral component interconnect, PCI) bus, a high-speed serial computer extension bus (peripheral component interconnect express, PCIe), a compute express link (compute express link, CXL), an extended industry standard architecture (extended industry standard architecture, EISA) bus, or the like. The bus may be classified into an address bus, a data bus, a control bus, and the like. For ease of representation, the bus is represented by using only one bold line in FIG. 3, but this does not mean that there is only one bus or one type of bus.

The input/output interface 36 is configured to implement human-computer interaction between a user and the computing device 30, for example, implement text interaction, voice interaction, or the like between the user and the computing device 30. The input/output interface 36 includes an input interface used by the user to input information to the computing device 30, and includes an output interface used by the computing device 30 to output information to the user.

Optionally, the input interface includes but is not limited to a touchscreen, a keyboard, a mouse, or a microphone. The touchscreen, the keyboard, or the mouse is configured to input text/image information, and the microphone is configured to input voice information. For example, the input interface may be configured to receive a migration indication entered by the user. For detailed descriptions of the migration indication, refer to related descriptions of S101 in the following method. Details are not described herein.

Optionally, the output interface includes but is not limited to a display screen and a speaker. The display screen is configured to output text/image information, and the speaker is configured to output voice information. For example, the output interface may be configured to output, to the user, a prompt information indicating that a to-be-migrated process has been migrated. For detailed descriptions of the prompt information indicating that the to-be-migrated process has been migrated, refer to related descriptions of S108 and S109 in the following method. Details are not described.

It should be noted that the structure shown in FIG. 3 does not constitute any limitation on the computing device 30. In addition to the components shown in FIG. 3, the computing device 30 includes more or fewer components than those shown in FIG. 3, a combination of some components, or a different arrangement of the component s.

A process migration method provided in embodiments of this application is described in detail with reference to accompanying drawings.

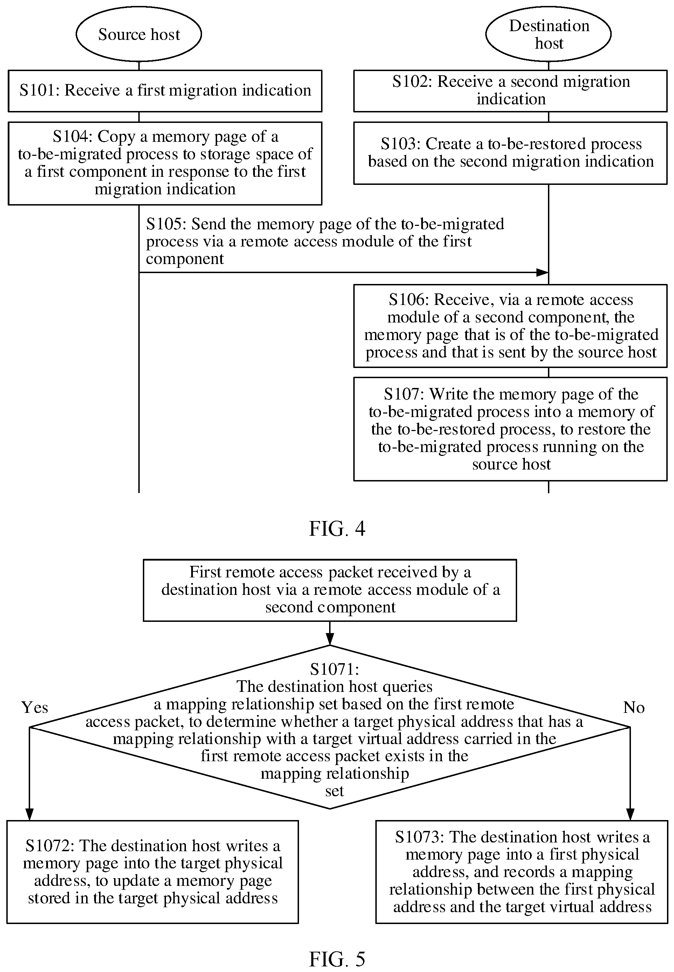

FIG. 4 is a schematic flowchart of a process migration method according to an embodiment of this application. Optionally, the method can be applied to the migration system shown in FIG. 1 or FIG. 2, and a source host and a destination host that have the hardware structure shown in FIG. 3 perform corresponding steps. The method includes the following steps.

S101: The source host receives a first migration indication.

The first migration indication indicates to migrate a to-be-migrated process running on the source host to the destination host. Herein, for descriptions of the to-be-migrated process, refer to the foregoing descriptions. Details are not described again.

The first migration indication includes identification information of the destination host, and the identification information of the destination host is used for communication between the source host and the destination host. In an example, the identification information of the destination host may be used by the source host to establish a queue pair (queue pair, QP) connection between a first component and a second component of the destination host via the first component, so that the source host and the destination host can communicate with each other based on the QP connection. For detailed descriptions of the first component and the second component, refer to the foregoing descriptions. Details are not described again. In another example, the identification information of the destination host may be used to determine an address of the destination host, so that the source host can communicate with the destination host based on the address.

Optionally, the identification information of the destination host may be a host identifier (identifier, ID), a host address, or the like of the destination host, and is not limited thereto. Herein, the host address is, for example, an internet protocol (internet protocol, IP) address of the host, and is not limited thereto.

In a first possible implementation, the source host receives the first migration indication entered by a user.

Specifically, the source host may receive, by using an input interface (the input interface in the input/output interface 36 shown in FIG. 3) of the source host, the first migration indication entered by the user.

For example, when determining that a process (namely, the to-be-migrated process) running on the source host needs to be migrated to the destination host, the user may enter the first migration indication on an interface displayed on a display screen of the source host. In response, the source host receives the first migration indication entered by the user. Herein, specific manners or processes of how the user determines the to-be-migrated process and how to determine that the process running on the source host needs to be migrated to the destination host are not limited. For example, when the source host outputs an abnormal alarm, the user may determine that a process running on the source host is the to-be-migrated process, and determine that the to-be-migrated process needs to be migrated to the destination host. For another example, when the source host outputs prompt information indicating that process resources are insufficient, the user may determine that a process whose resources are insufficient and that is indicated by the prompt information as the to-be-migrated process, and determine that the to-be-migrated process needs to be migrated to the destination host.

In a second possible implementation, the source host receives the first migration indication sent by a management node. The management node is a node (for example, the management node 21 shown in FIG. 2) configured to manage a cluster system in which the source host is located.

Specifically, when determining that a process in a worker node in the cluster system managed by the management node needs to be migrated, the management node determines that the process is the to-be-migrated process, and determines that the worker node is the source host running the to-be-migrated process. Further, the management node determines another worker node in the cluster system managed by the management node as the destination host, and generates the first migration indication that indicates to migrate the to-be-migrated process running on the source host to the destination host. Then, the management node sends the first migration indication to the source host. In response, the source host receives the first migration indication sent by the management node.

A detailed process of how the management node determines the to-be-migrated process in the worker nodes in the cluster system managed by the management node is not limited in embodiments of this application. For example, the management node may determine, based on an indication entered by the user, the to-be-migrated process in the worker nodes in the cluster system managed by the management node. For another example, when receiving an abnormal alarm sent by a worker node, the management node determines the worker node as the source host, and determines a process running on the worker node as the to-be-migrated process. For still another example, when receiving prompt information that indicates that process resources are insufficient and that is sent by a worker node (for example, a worker node 1), the management node determines a process whose resources are insufficient, that runs on the worker node 1, and that is indicated by the prompt information as the to-be-migrated process, and determines the worker node 1 as the source host running the to-be-migrated process. This is not limited thereto.

After determining the to-be-migrated process, the management node may determine, in the cluster system managed by the management node, the destination host to which the to-be-migrated process is to be migrated. Optionally, the management node may determine, based on a load balancing rule, a worker node with light service load in the cluster system as the destination host. Optionally, the management node may randomly determine a worker node that is other than the worker node serving as the source host and that is in the cluster system as the destination host. This is not limited herein.

Optionally, after determining the to-be-migrated process and the destination host, the management node may further send a second migration indication to the destination host. For detailed descriptions of the second migration indication, refer to the following descriptions of S102. Details are not described herein.

For example, with reference to FIG. 2, when the management node 21 receives prompt information 1 sent by the worker node 221 and the prompt information 1 indicates that hardware resources of a process 1 running on the worker node 221 are insufficient, the management node 21 determines that the process 1 is the to-be-migrated process, and determines that the worker node 221 is the source host running the to-be-migrated process. Next, the management node 21 determines, based on the load balancing rule, that the process 1 needs to be migrated to the worker node 222, that is, the management node 21 determines that the worker node 222 is the destination host to which the process 1 is to be migrated. Then, the management node 21 generates the first migration indication that indicates to migrate the process 1 running on the worker node 221 to the worker node 222. Further, the management node 21 sends the first migration indication to the worker node 221, where the first migration indication includes identification information of the worker node 222. In response, the worker node 221 receives the first migration indication sent by the management node 21.

Optionally, the management node 21 further generates the second migration indication that indicates to migrate the process 1 running on the worker node 221 to the worker node 222, and sends the second migration indication to the worker node 222.

S102: The destination host receives the second migration indication.

The second migration indication indicates to migrate the to-be-migrated process running on the source host to the destination host. The second migration indication includes identification information of the source host and a process ID of the to-be-migrated process.

The identification information of the source host is used for communication between the destination host and the source host. In an example, the identification information of the source host may be used by the destination host to establish the QP connection between the second component and the first component of the source host via the second component, so that the destination host and the source host can communicate with each other based on the QP connection. In another example, the identification information of the source host may be used to determine an address of the source host, so that the destination host can communicate with the source host based on the address.

Optionally, the identification information of the source host may be a host ID, a host address, or the like of the source host, and is not limited thereto. Herein, the host address is, for example, an IP address of the host, and is not limited thereto.

The process ID of the to-be-migrated process uniquely identifies the to-be-migrated process among all processes running on the source host. The process ID of the to-be-migrated process is further used to create a to-be-restored process described below on the destination host. Details are not described herein.

In a possible implementation, the destination host receives the second migration indication sent by the source host running the to-be-migrated process.

Specifically, after the source host running the to-be-migrated process receives the first migration indication in S101, the source host may determine the destination host based on the identification information of the destination host carried in the first migration indication, and generate the second migration indication that includes the identification information of the source host and the process ID of the to-be-migrated process. Then, the source host sends the second migration indication to the destination host. In response, the destination host receives the second migration indication sent by the source host.

In another possible implementation, the destination host receives the second migration indication sent by the management node.

For descriptions of receiving, by the destination host, the second migration indication sent by the management node, refer to related descriptions in the second possible implementation in S101. Details are not described again.

S103: The destination host creates the to-be-restored process based on the second migration indication.

A process ID of the to-be-restored process is the process ID that is of the to-be-migrated process and that is carried in the second migration indication. In addition, a resource parameter of the to-be-restored process created by the destination host is the same as a resource parameter of the to-be-migrated process running on the source host. Herein, a resource parameter of a process is a parameter of a hardware resource needed when the process runs on a host. The parameter of the hardware resource needed when the process runs on the host includes but is not limited to a CPU parameter, a memory size and range, or a network bandwidth parameter.

For example, when a memory size of the to-be-migrated process is 1 MB and a virtual address range of a memory of the to-be-migrated process is 1 to 1024, a memory size of the to-be-restored process is also 1 MB and a virtual address range of a memory of the to-be-restored process is 1 to 1024.

In some possible cases, when the to-be-migrated process is a single process or a plurality of independent processes, in addition to the identification information of the source host and the process ID of the to-be-migrated process, the second migration indication received by the destination host further includes a resource parameter for running each process and running code of each process. Further, based on the resource parameters and the running code, the destination host may create the to-be-restored process that has the same resource parameter and same running code as the to-be-migrated process.

In some other possible cases, when the to-be-migrated process is a process or a process group for implementing a to-be-migrated container and the second migration indication is received by the destination host from the management node, in addition to the identification information of the source host and the process ID of the to-be-migrated process, the second migration indication received by the destination host further includes an image file identifier of the to-be-migrated container. Herein, the image file identifier may be a name, an ID, or the like of an image file. This is not limited herein. In this way, the destination host can obtain the image file of the to-be-migrated container based on the image file identifier, and create a to-be-restored container based on the obtained image file. It should be understood that the to-be-migrated container is also initially created based on the image file. Therefore, the to-be-restored container is a container that is exactly the same as the to-be-migrated container during initial creation, for example, all of a resource parameter, a process tree structure (pstree) of a container, and running code of the to-be-restored container are the same as those of the to-be-migrated container.

A process tree structure of a container is a structure of a connection relationship between a plurality of processes included in the container, for example, a distributed connection structure. This is not limited herein. An image file (or referred to as a container image (container image)) of a container includes but is not limited to program code of the container, a process tree structure of the container, and a resource parameter needed to run the container. Therefore, the host can create the container based on the image file of the container.

In addition, the image file of the to-be-migrated container may be prestored in the source host, the destination host, a cloud platform, or the like. This is not limited in embodiments of this application.

For example, when the image file of the to-be-migrated container is prestored in the destination host, the destination host may query a local database based on the image file identifier carried in the second migration indication, to find the corresponding image file, and create the to-be-restored container based on the found image file.

For another example, when the image file of the to-be-migrated container is prestored in the cloud platform (or the source host), the destination host may send an obtaining request for obtaining the container image file to the cloud platform (or the source host), where the obtaining request includes the image file identifier carried in the second migration indication. In response to the obtaining request, the cloud platform (or the source host) queries a database of the cloud platform (or the source host) based on the image file identifier carried in the obtaining request, to find the corresponding image file, and sends the found image file to the destination host. In this way, the destination host can receive the image file sent by the cloud platform (or the source host), and create the to-be-restored container based on the image file.

In some other possible cases, when the to-be-migrated process is a process or a process group for implementing a to-be-migrated container and the second migration indication is received by the destination host from the source host, in addition to the identification information of the source host and the process ID of the to-be-migrated process, the second migration indication received by the destination host further includes an image file of the to-be-migrated container. Alternatively, when or after the source host sends the second migration indication including the identification information of the source host and the process ID of the to-be-migrated process to the destination host, the source host further proactively sends an image file of the to-be-migrated container to the destination host.

In this way, the destination host can create a to-be-restored container based on the received image file. Details are not described again.

Further, after creating the to-be-restored process, the destination host further records a mapping relationship set corresponding to the to-be-restored process.

The mapping relationship set corresponding to the to-be-restored process includes a mapping relationship between a physical address and a virtual address that are used to store each of existing memory pages of the to-be-restored process. It can be understood that a physical address used to store a memory page of the to-be-restored process is a physical address that is in a physical memory of the destination host and that is actually used to store the memory page. A virtual address used to store a memory page of the to-be-restored process is a virtual address of the memory (or referred to as a virtual memory) of the to-be-restored process.

For example, as listed in Table 1, it is assumed that the to-be-restored process includes three memory pages during initial creation: a memory page 1, a memory page 2, and a memory page 3. In addition, a virtual address used to store the memory page 1 is VA1 and a physical address used to store the memory page 1 is PA1, a virtual address used to store the memory page 2 is VA2 and a physical address used to store the memory page 2 is PA2, and a virtual address used to store the memory page 3 is VA3 and a physical address used to store the memory page 3 is PA3. After the destination host creates the to-be-restored process, a recorded mapping relationship set is described in the following Table 1:

**Table 1**

| Virtual address | Physical address |
|---|---|
| VA1 | PA1 |
| VA2 | PA2 |
| VA3 | PA3 |

Optionally, when the to-be-migrated process includes a plurality of processes, the to-be-restored process also includes a plurality of processes. In this case, the mapping relationship set that is of the to-be-restored process and that is recorded by the destination host specifically includes a process ID of each process in the to-be-restored process and a mapping relationship between a virtual address and a physical address that are used to store a memory page of each process. For example, for any process like a first process in the to-be-restored process, the mapping relationship set recorded by the destination host includes a process ID of the first process and a mapping relationship between a virtual address and a physical address that are used to store a memory page of the first process.

It can be understood that, when the to-be-migrated process (or the to-be-restored process) includes a plurality of processes, virtual address ranges of memories of different processes in the plurality of processes may be identical or different. When virtual address ranges of memories of different processes in the to-be-restored process are identical, in the mapping relationship set that is of the to-be-restored process and that is recorded by the destination host, different process IDs may be corresponding to a same virtual address.

For example, with reference to Table 1, as listed in Table 2, it is assumed that the to-be-restored process includes two processes: a process 1 whose process ID is an ID1 and a process 2 whose process ID is an ID2. The process 1 includes the memory page 1, the memory page 2, and the memory page 3, and the virtual addresses and the physical addresses that are used to store the memory page 1, the memory page 2, and the memory page 3 are described in Table 1. In addition, the process 2 includes two memory pages: a memory page 4 and a memory page 5. Moreover, a virtual address used to store the memory page 4 is VA4 and a physical address used to store the memory page 4 is PA4, and a virtual address used to store the memory page 5 is VA5 and a physical address used to store the memory page 5 is PA5. After the destination host creates the to-be-restored process, a recorded mapping relationship set is described in the following Table 2:

**Table 2**

| Process ID | Virtual address | Physical address |
|---|---|---|
| ID1 | VA1 | PA1 |
| | VA2 | PA2 |
| | VA3 | PA3 |
| ID2 | VA4 | PA4 |
| | VA5 | PA5 |

Optionally, the destination host may record the mapping relationship set in a memory, or the destination host records the mapping relationship set in storage space of the second component via the second component. This is not limited herein.

S104: The source host copies a memory page of the to-be-migrated process to storage space of the first component in response to the first migration indication.

For detailed descriptions of the first component, refer to the foregoing descriptions. Details are not described herein again.

In practice, after copying the memory page of the to-be-migrated process to the storage space of the first component, the source host needs to send the memory page copied to the storage space of the first component to the destination host (as described in S105), and this process takes a specific time period. To reduce a time for suspending data/service processing in the process during migration of the to-be-migrated process, and reduce stalling phenomena occurring when the user uses the process, in the method provided in this embodiment of this application, the to-be-migrated process is configured to run normally in this time period. In this case, a dirty memory page may be generated in the memory of the to-be-migrated process. The dirty memory page is a memory page modified by the to-be-migrated process in this time period. For example, the to-be-migrated process updates data on a memory page, deletes a memory page, or newly adds one or more memory pages. This is not limited thereto.

Therefore, in a process of migrating the to-be-migrated process running on the source host to the destination host, for a copy operation of "copying the memory page of the to-be-migrated process to the storage space of the first component" performed by the source host, the source host may perform iterative copy operations for a plurality of times.

When performing a copy operation for the first time, the source host copies all memory pages of the to-be-migrated process to the storage space of the first component. For any copy operation other than a 1^{st} copy operation, the source host first determines a dirty memory page generated by the to-be-migrated process during an interval, and copies all dirty memory pages generated by the to-be-migrated process during the interval to the storage space of the first component. Herein, the interval is a time interval from execution of a previous copy operation of a current copy operation to execution of the current copy operation. For a process in which the source host determines the dirty memory page generated by the to-be-migrated process during the interval, refer to the following descriptions. Details are not described herein.

In other words, when performing the copy operation for the first time, the source host copies all the memory pages of the to-be-migrated process to the storage space of the first component. After the source host completes sending of all the memory pages that are copied to the storage space of the first component when the copy operation is performed for the first time, the source host performs a 2^{nd} copy operation. When performing the 2^{nd} copy operation, the source host may copy all dirty memory pages generated by the to-be-migrated process during a first interval to the storage space of the first component. The first interval is a time interval between execution of the copy operation for the first time and execution of the copy operation for the second time.

The rest may be deduced by analogy. The source host does not stop an iterative copy operation until a quantity of dirty memory pages copied by the source host to the storage space of the first component is less than or equal to a first threshold when the source host performs a specific copy operation, for example, when the source host performs a copy operation for an m^{th} time (where m is a positive integer), or until a quantity of times of iterative copy operations (that is, a value of m) is greater than or equal to a second threshold when the source host performs a copy operation for an m^{th} time. In this case, the m^{th} copy operation is a copy operation performed by the source host on the memory page of the to-be-migrated process for the last time.

Specific values of the first threshold and the second threshold are not specifically limited in embodiments of this application. It should be understood that in the method provided in this embodiment of this application, a lower first threshold or a higher second threshold indicates that a small quantity of memory pages or dirty memory pages need to be copied when the source host performs the copy operation on the memory page of the to-be-migrated process for the last time.

It should be noted that, when the source host performs the copy operation on the memory page of the to-be-migrated process for the last time, the source host further collects running status information that is of the to-be-migrated process and that is present when the copy operation is performed for the last time, and writes the collected running status information into the storage space of the first component. Herein, the running status information of the process may include a status of a CPU (for example, a value of a register in the CPU) that runs the process, a namespace of the process, and a file descriptor currently opened by the process, and the like. This is not limited thereto. The running status information of the to-be-migrated process may be used to set, on the destination host, a running status of the migrated process.

For brief description, the following describes in detail a process in which the source host performs a copy operation by using an example in which the source host performs any copy operation on the memory page of the to-be-migrated process.

Specifically, in response to the first migration indication, the source host first establishes a mapping relationship between a virtual address of the memory of the to-be-migrated process and the storage space of the first component. The mapping relationship between the virtual address of the memory of the to-be-migrated process and the storage space of the first component is actually a mapping relationship between a segment of free virtual address in the memory of the to-be-migrated process and the storage space of the first component. Further, the source host copies, based on the established mapping relationship, the memory page of the to-be-migrated process to the free virtual address that is in the memory of the to-be-migrated process and that has the mapping relationship with the storage space of the first component, to copy the memory page of the to-be-migrated process to the storage space of the first component that has the mapping relationship with the free virtual address.

In a first possible implementation, the source host may freeze the to-be-migrated process in response to the first migration indication. Freezing the to-be-migrated process can be understood as suspending data/service processing in the to-be-migrated process, while externally receiving data and/or control information by the to-be-migrated process, and the like are normally performed. Alternatively, it is understood that the frozen to-be-migrated process can normally receive information of another process/user, but processing of received data is suspended inside the to-be-migrated process.

Then, the source host implants parasitic code in the to-be-migrated process, and establishes the mapping relationship between the virtual address of the memory of the to-be-migrated process and the storage space of the first component based on the parasitic code implanted in the to-be-migrated process.

Specifically, the source host may map a virtual storage device that is of the storage space of the first component and that is presented on the source host to the segment of free virtual address in the memory of the to-be-migrated process by using the parasitic code implanted in the to-be-migrated process, to establish the mapping relationship between the virtual address of the memory of the to-be-migrated process and the storage space of the first component.

For example, the first component is a DPU. In this case, a virtual storage device that is of storage space of the DPU and that is presented on the source host is a virtual persistent memory device that supports a direct access (direct access, DAX) mechanism (referred to as a DAX device below for short). Further, the source host maps the DAX device to a segment of free virtual address in the memory of the to-be-migrated process by invoking an mmap interface by using the parasitic code implanted in the to-be-migrated process, to establish a mapping relationship between the virtual address of the memory of the to-be-migrated process and the storage space of the DPU. The DAX is a high-speed data transmission operation, and the DAX allows direct data reading and writing between an external device and a storage without intervention of a CPU. In addition, when data is written into the DAX device, the data is actually written into the storage space of the DPU.

When the to-be-migrated process is a process group including a plurality of processes, the source host may set the virtual storage device that is of the storage space of the first component and that is presented on the source host as a plurality of virtual storage devices. Further, the source host maps each of the plurality of virtual storage devices to a segment of free virtual address in a memory of each process in the process group by using the parasitic code implanted in the to-be-migrated process, to establish a mapping relationship between a virtual address of the memory of each process in the process group and the storage space of the first component. One process in the to-be-migrated process is corresponding to one virtual storage device.

In this case, optionally, the source host may further record a mapping relationship between each virtual storage device and each process in the to-be-migrated process. Specifically, the source host records a mapping relationship between a device ID of each virtual storage device and a process ID of each process in the to-be-migrated process. For example, for any process like a process 1 in the to-be-migrated process, when the source host maps a virtual storage device 1 that is of the storage space of the first component and that is presented on the source host to a segment of free virtual address in a memory of the process 1 by using parasitic code implanted in the process 1, the source host records a mapping relationship between a device ID of the virtual storage device 1 and a process ID of the process 1.

Optionally, the source host may record, in the storage space of the first component, the mapping relationship between each virtual storage device and each process in the to-be-migrated process.

Further, the source host performs a memory page copy operation on the memory of the to-be-migrated process by using the parasitic code implanted in the to-be-migrated process. Specifically, the source host copies, by using the parasitic code implanted in the to-be-migrated process, the memory page of the to-be-migrated process to a free virtual address that is in the memory of the to-be-migrated process and that has a mapping relationship with a virtual storage device. This is equivalent to copying the memory page of the to-be-migrated process to the virtual storage device that has a mapping relationship with the virtual address of the memory of the to-be-migrated process, and is also equivalent to copying the memory page of the to-be-migrated process to the storage space that is of the first component and that is corresponding to the virtual storage device.

It should be noted that, when the source host performs a copy operation based on the parasitic code implanted in the to-be-migrated process, after the source host completes one copy operation, the source host deletes the parasitic code implanted in the to-be-migrated process and unfreezes the to-be-migrated process, so that the to-be-migrated process continues to run.

It should be understood that, after the source host completes sending of a memory page that is copied to the storage space of the first component through one copy operation, the source host performs a next copy operation based on the first possible implementation described in S104, to copy a dirty memory page generated by the to-be-migrated process during an interval between the two copy operations to the storage space of the first component.

In a second possible implementation, a process memory management module is configured in a kernel of an operating system of the source host, and the process memory management module is configured to manage a process that runs on the source host and is registered with the process memory management module. In addition, the process management module can track a modification status of a memory page of the process, and support a memory page copy operation on a memory of the process.

In this embodiment of this application, the to-be-migrated process is pre-registered with the process memory management module configured in the source host.

Specifically, the source host may map a virtual storage device that is of the storage space of the first component and that is presented on the source host to a segment of free virtual address in the memory of the to-be-migrated process via the process memory management module, to establish the mapping relationship between the virtual address of the memory of the to-be-migrated process and the storage space of the first component.

For example, the first component is still a DPU. In this case, a virtual storage device that is of storage space of the DPU and that is presented on the source host is a DAX device, and the source host may map the DAX device to a segment of free virtual address in the memory of the to-be-migrated process by invoking an mmap interface via the process memory management module, to establish a mapping relationship between the virtual address of the memory of the to-be-migrated process and the storage space of the first component.

Optionally, when the to-be-migrated process is a process group including a plurality of processes, the source host may map the virtual storage device that is of the storage space of the first component and that is presented on the source host to a segment of free virtual address in a memory of each process in the process group via the process memory management module, to establish the mapping relationship between the virtual address of the memory of the to-be-migrated process and the storage space of the first component.

Optionally, when the to-be-migrated process is a process group including a plurality of processes, the source host may set the virtual storage device that is of the storage space of the first component and that is presented on the source host as a plurality of virtual storage devices. Further, the source host may map each of the plurality of virtual storage devices to a segment of free virtual address in a memory of each process in the process group via the process memory management module, to establish a mapping relationship between a virtual address of the memory of each process in the process group and the storage space of the first component. One process in the to-be-migrated process is corresponding to one virtual storage device. In this case, optionally, the source host may further record a mapping relationship between each virtual storage device and each process in the to-be-migrated process. Optionally, the source host may record, in the storage space of the first component, the mapping relationship between each virtual storage device and each process in the to-be-migrated process. For detailed description of the mapping relationship that is between each virtual storage device and each process in the to-be-migrated process and that is recorded by the source host, refer to the foregoing descriptions. Details are not described again.

Further, the source host may perform a memory page copy operation on the memory of the to-be-migrated process via the process memory management module. Specifically, the source host copies, via the process memory management module, the memory page of the to-be-migrated process to a virtual address that is in the memory of the to-be-migrated process and that has a mapping relationship with a virtual storage device. This is equivalent to copying the memory page of the to-be-migrated process to the virtual storage device that has a mapping relationship with the virtual address of the memory of the to-be-migrated process, and is also equivalent to copying the memory page of the to-be-migrated process to the storage space that is of the first component and that is corresponding to the virtual storage device.

Optionally, the source host may directly copy, via the process memory management module, the memory page of the to-be-migrated process to the virtual storage device that is of the storage space of the first component and that is presented on the source host, to copy the memory page of the to-be-migrated process to the storage space of the first component.

It should be noted that, when copying the memory page of the to-be-migrated process via the process memory management module, the source host does not need to freeze the to-be-migrated process. In this way, the memory page of the to-be-migrated process is copied by using the memory management module during process migration, so that the user is completely unaware of the process migration.

It should be understood that, when performing iterative copy operations for a plurality of times on the memory page of the to-be-migrated process via the process memory management module, the source host needs to establish the mapping relationship between the virtual address of the memory of the to-be-migrated process and the storage space of the first component only when performing the copy operation for the first time. To be specific, after the source host completes sending of a memory page that is copied to the storage space of the first component through one copy operation, the source host performs a next copy operation in the second possible implementation described in S104, so that in a process of copying a dirty memory page generated by the to-be-migrated process during an interval between the two copy operations to the storage space of the first component, the mapping relationship between the virtual address of the memory of the to-be-migrated process and the storage space of the first component does not need to be established again.

In addition, if the source host performs a copy operation on the memory page of the to-be-migrated process based on the first possible implementation or the second possible implementation described in S104, when it is determined that a quantity of memory pages (or dirty memory pages) that need to be copied to the storage space of the first component in the current copy operation is less than or equal to a first threshold, or a quantity of iteration times of the current copy operation is greater than or equal to a second threshold, the source host determines that the current copy operation on the memory page of the to-be-migrated process is a last copy operation. In this case, the source host collects running status information that is of the to-be-migrated process and that is present when the current copy operation is performed, and writes the running status information into the storage space of the first component.

It should be noted that, when the source host determines that the current copy operation on the memory page of the to-be-migrated process is the last copy operation, if the source host performs the copy operation based on the first possible implementation described in S104, the source host does not need to unfreeze the to-be-migrated process after completing the last copy operation. If the source host performs the copy operation based on the second possible implementation described in S104, when performing the last copy operation, the source host first freezes the to-be-migrated process and then performs the copy operation, and does not need to unfreeze the to-be-migrated process after completing the last copy operation. This can ensure that the to-be-migrated process that is restored on the destination host side is exactly the same as the to-be-migrated process when the source host performs the copy operation for the last time. "Exactly the same" herein means that running statuses, memory data, and the like of the processes are the same.

Further, optionally, when the source host receives indication information that indicates that the to-be-migrated process has been restored and that is sent by the destination host, the source host may delete the to-be-migrated process.

Optionally, the source host may directly delete the to-be-migrated process when the source host determines that the current copy operation on the memory page of the to-be-migrated process is the last copy operation and after the last copy operation is completed.

S105: The source host sends the memory page of the to-be-migrated process to the destination host via a remote access module of the first component.

The memory page of the to-be-migrated process is used to restore the to-be-migrated process on the destination host. Specifically, the memory page of the to-be-migrated process is used to restore, on the destination host, the to-be-restored process created by the destination host, to restore the to-be-migrated process on the destination host side, and migrate the to-be-migrated process on the source host to the destination host.

The source host may perform iterative copy operations for a plurality of times on the memory page of the to-be-migrated process. In this case, optionally, each time the source host performs one copy operation, the source host sends, to the destination host, a memory page that is copied to the storage space of the first component after the copy operation is performed. Optionally, because it may take a specific time for the source host to complete one copy operation, the source host may send a memory page that has been copied to the storage space of the first component to the destination host in real time in each copy operation process. In other words, the memory page is copied and sent at the same time.

By using an example in which the source host sends, to the destination host, a memory page that is copied to the storage space of the first component after the source host performs a copy operation once, the following describes a process in which the source host sends the memory page of the to-be-migrated process to the destination host via the remote access module of the first component.

Specifically, based on the memory page that is of the to-be-migrated process and that is copied to the storage space of the first component, the source host first generates one or more remote access packets via the remote access module of the first component. One remote access packet includes one or more memory pages copied to the storage space of the first component, and a target virtual address of each of the one or more memory pages in the memory of the to-be-migrated process. A target virtual address of a memory page in the memory of the to-be-migrated process may be referred to as a target virtual address corresponding to the memory page, and the memory page may also be referred to as a memory page corresponding to the target virtual address. Therefore, the remote access packet herein can also be understood as a remote access packet including one or more memory pages and a target virtual address corresponding to each of the one or more memory pages.

For example, assuming that a remote access packet 1 includes two memory pages copied to the storage space of the first component and the two memory pages are a memory page 1 and a memory page 2, the remote access packet 1 further includes a target virtual address 1 of the memory page 1 in the memory of the to-be-migrated process and a target virtual address 2 of the memory page 2 in the memory of the to-be-migrated process.

Optionally, when the to-be-migrated process includes a plurality of processes, when the remote access module of the first component generates a remote access packet, in addition to one or more memory pages and a target virtual address of each of the one or more memory pages in the memory of the to-be-migrated process, the remote access packet further includes a process ID of a process to which each of the one or more memory pages belongs. A specific implementation of determining a process ID of a process to which a memory page of the to-be-migrated process belongs is not limited in embodiments of this application. For example, a process ID of a process to which a memory page belongs may be recorded in the memory page of the to-be-migrated process. For another example, based on a virtual storage device to which the memory page is copied during copying of the memory page, the mapping relationship that is between each virtual storage device and each process in the to-be-migrated process and that is recorded by the source host is queried, to determine the process to which the memory page belongs and then determine the process ID of the process to which the memory page belongs. For detailed description of the mapping relationship that is between each virtual storage device and each process in the to-be-migrated process and that is recorded by the source host, refer to related descriptions of S104. Details are not described again.

For example, assuming that a remote access packet 1 includes two memory pages copied to the storage space of the first component and the two memory pages are a memory page 1 of a process 1 and a memory page 2 of a process 2, the remote access packet 1 further includes a target virtual address 1 of the memory page 1 in a memory of the process 1 and a process ID of the process 1, and includes a target virtual address 2 of the memory page 2 in a memory of the process 2 and a process ID of the process 2.

In addition, for the remote access packet generated by the remote access module of the first component, a destination address of the remote access packet is an address of a receiving buffer (buffer) in the destination host, and the receiving buffer may be a segment of storage space in the storage space of the second component of the destination host. This is not limited thereto.

Optionally, the first component may prestore the address of the receiving buffer of the destination host.

Optionally, the first component may obtain the address of the receiving buffer of the destination host from the destination host. Optionally, the first component may obtain the address of the receiving buffer of the destination host from the destination host in any one of the following manners.

Manner 1: After receiving the first migration indication, the source host sends an obtaining request to the destination host via the first component, where the obtaining request is used to request to obtain the address of the receiving buffer of the destination host. In response to the obtaining request, the destination host may divide the storage space of the second component to obtain a segment of storage space as the receiving buffer, and send the address of the receiving buffer to the first component of the source host via the second component, so that the first component of the source host obtains the address of the receiving buffer of the destination host.

Optionally, both the obtaining request sent by the source host to the destination host and the address of the receiving buffer sent by the destination host to the source host may be transmitted through the QP connection between the first component of the source host and the second component of the destination host, or may be transmitted based on the address of the source host and the address of the destination host. This is not limited herein. For detailed descriptions of the QP connection between the first component and the second component, refer to related descriptions of S101 and S102. Details are not described again.

Manner 2: After receiving the second migration indication, the destination host may divide the storage space of the second component to obtain a segment of storage space as the receiving buffer, and send the address of the receiving buffer to the first component of the source host via the second component, so that the first component of the source host obtains the address of the receiving buffer of the destination host.

Optionally, the destination host may send the address of the receiving buffer to the first component of the source host through the QP connection between the second component and the first component of the source host. Alternatively, the destination host may send the address of the receiving buffer to the source host based on the address of the source host. This is not limited herein.

In this way, when generating the remote access packet, the remote access module of the first component may use the address, obtained by the first component, of the receiving buffer of the destination host as the destination address of the remote access packet.

In some examples, when the first component and the second component are RNICs or DPUs including RNICs, the generated remote storage packet may be an RDMA send (send) packet or an RDMA write (write) packet. This is not limited herein.

Further, optionally, after the first component completes sending, by using the remote access packet, all memory pages that are copied by the source host to the storage space of the first component through one copy operation, the source host performs a copy operation on the memory page of the to-be-migrated process again.

Optionally, after the first component completes sending, by using the remote access packet, all the memory pages that are copied by the source host to the storage space of the first component through one copy operation, and receives a receiving completion response packet returned by the second component of the destination host, the source host performs a copy operation on the memory page of the to-be-migrated process again. The receiving completion response packet is used to notify the source host that the memory page copied by the source host to the storage space of the first component through the current copy operation has been received.

In addition, when the source host determines that the current copy operation is the last copy operation in S104, the storage space of the first component further includes running status information that is of the to-be-migrated process and that is collected by the source host. Therefore, in S105, when sending the memory page that is copied to the storage space of the first component for the last time to the destination host, the remote access module of the first component further sends the running status information of the to-be-migrated process to the destination host.

In this case, optionally, the remote access packet generated by the remote access module of the first component further includes the running status information of the to-be-migrated process. The remote access module of the first component sends, to the destination host, the remote access packet that carries the running status information of the to-be-migrated process. Optionally, in a process of sending or after sending the memory page that is copied to the storage space of the first component for the last time to the destination host, the remote access module of the first component sends an indication message/packet including the running status information of the to-be-migrated process to the destination host. This is not limited thereto.

It should be understood that a sequence of performing S103 by the destination host and performing S104 and S105 by the source host is not limited in embodiments of this application. For example, S103 may be performed before S104 and S105, S104 and S105 may be performed before S103, or S103, S104, and S105 may be performed at the same time.

S106: The destination host receives, via a remote access module of the second component, the memory page that is of the to-be-migrated process and that is sent by the source host.

Specifically, the destination host receives, via the remote access module of the second component, the one or more remote access packets sent by the source host, and writes content carried in the one or more remote access packets into the receiving buffer indicated by the destination address of the one or more remote access packets.

Optionally, when the destination host completes receiving of the memory page that is copied by the source host to the storage space of the first component through one copy operation, the destination host returns the receiving completion response packet to the source host via the remote access module of the second component, to notify the source host that the memory page copied by the source host to the storage space of the first component through the current copy operation has been received.

It can be understood that the memory page that is copied by the source host to the storage space of the first component through one copy operation may be sent to the destination host by using one or a preset quantity of remote access packets. The preset quantity may be determined based on a quantity of memory pages copied in the current copy operation. In addition, when the source host sends, to the destination host by using the remote access packet, the memory page that is copied to the storage space of the first component through one copy operation, a 1^{st} remote access packet sent by the source host to the destination host may carry the quantity of remote access packets that need to be sent this time. Further, the destination host may determine, based on the quantity of received remote access packets, whether the remote access packet that needs to be received this time has been received; and when determining that the receiving is completed, return the receiving completion response packet to the source host.

In addition, when or after receiving, via the remote access module of the second component, the memory page that is copied to the storage space of the first component through the last copy operation and that is sent by the source host, the destination host may further receive the packet that includes the running status information of the to-be-migrated process and that is sent by the source host. For detailed descriptions of the packet including the running status information of the to-be-migrated process, refer to the foregoing descriptions. Details are not described again.

S107: The destination host writes the memory page of the to-be-migrated process into the memory of the to-be-restored process, to restore the to-be-migrated process running on the source host.

Specifically, because the memory size and range of the to-be-migrated process on the source host are exactly the same as those of the to-be-restored process created by the destination host in step S103, the destination host writes the memory page that is of the to-be-migrated process and that is received from the source host into a virtual address of the memory of the to-be-restored process that is the same as a target virtual address for storing the memory page in the memory of the to-be-migrated process. In this way, the to-be-restored process can be restored, and the to-be-migrated process can be restored on the destination host.

For example, it is assumed that a target virtual address, in the memory of the to-be-migrated process, of a memory page 1 that is of the to-be-migrated process and that is received by the destination host is 001. After receiving the memory page 1, the destination host writes the memory page 1 into a virtual address 001 in the memory of the to-be-restored process.

Optionally, when the to-be-migrated process includes a plurality of processes, the memory size and range of the to-be-migrated process on the source host are exactly the same as those of the to-be-restored process created by the destination host in step S103, and process IDs of processes in the to-be-migrated process are also in one-to-one correspondence with process IDs of processes in the to-be-restored process. Therefore, for the first process in the to-be-restored process, assuming that a process that has a same process ID as the first process and that is in the to-be-migrated process is a second process, the destination host writes a memory page that is of the second process in the to-be-migrated process and that is received from the source host into a virtual address of a memory of the first process in the to-be-restored process, where the virtual address is the same as a target virtual address for storing the memory page in the memory of the first process. In this way, the to-be-restored process can be restored, and the to-be-migrated process can be restored on the destination host.

In addition, after writing the memory page that is of the to-be-migrated process and that is received from the source host into the memory of the to-be-restored process, the destination host further parses the running status information of the to-be-migrated process from the received packet including the running status information of the to-be-migrated process, and sets a running status of the to-be-restored process based on the parsed running status information. For example, a status of a CPU (for example, a value of a register in the CPU) that runs the to-be-restored process, a namespace of the to-be-restored process, and a file descriptor that currently needs to be opened by the to-be-restored process, and the like are set. This is not limited thereto. In this way, the to-be-restored process that is exactly the same as the to-be-migrated process can be obtained, to implement migration of the to-be-migrated process.

In a possible implementation, the destination host specifically performs, by using a processor, an operation of writing the received memory page into the memory of the to-be-restored process. In this case, the destination host may record the mapping relationship set in a memory of the destination host in S103. In this way, the mapping relationship set recorded in the memory of the destination host can be maintained and updated by the processor of the destination host.

In another possible implementation, the destination host specifically performs, via the second component, an operation of writing the received memory page into the memory of the to-be-restored process. In this case, the destination host may record the mapping relationship set in the storage space of the second component of the destination host in S103. In this way, the mapping relationship set recorded in the storage space of the second component of the destination host can be maintained and updated by the second component of the destination host.

The following describes, in detail with reference to FIG. 5 and by using any remote access packet like a first remote access packet received by the destination host via the remote access module of the second component as an example, an operation process in which the destination host writes the received memory page into the memory of the to-be-restored process and a process in which the destination host maintains and updates the mapping relationship set. The processes may include the following steps.

S1071: The destination host queries the mapping relationship set based on the received first remote access packet, to determine whether a target physical address that has a mapping relationship with a target virtual address carried in the first remote access packet exists in the mapping relationship set.

Because the first remote access packet includes one or more memory pages and a target virtual address of each of the one or more memory pages in the memory of the to-be-migrated process, the destination host may query the mapping relationship set based on each target virtual address carried in the first remote access packet, to determine whether a target physical address that has a mapping relationship with each target virtual address exists in the mapping relationship set.

For example, with reference to Table 1, the destination host may query, based on the target virtual address 1 carried in the first remote access packet, the mapping relationship set described in Table 1, to determine whether a target physical address that has a mapping relationship with the target virtual address 1 exists in the mapping relationship set described in Table 1.

Optionally, when the to-be-migrated process includes a plurality of processes, because the first remote access packet further includes a process ID of a process to which each of the memory page carried in the packet belongs, the destination host may query the mapping relationship set based on each target virtual address and a process ID corresponding to each target virtual address that are carried in the first remote access packet, to determine whether a target physical address that has a mapping relationship with each target virtual address and the process ID corresponding to each target virtual address exists in the mapping relationship set. The process ID corresponding to the target virtual address is a process ID of a process to which a memory page corresponding to the target virtual address belongs.

It should be understood that, when virtual address ranges of memories of different processes in the to-be-restored process are identical, in the mapping relationship set described above, different process IDs may be corresponding to a same virtual address. Therefore, the destination host needs to query the mapping relationship set based on two elements: a target virtual address and a process ID corresponding to the target virtual address, to obtain a target physical address that has a mapping relationship with the two elements.

For example, with reference to Table 2, the destination host may query, based on the target virtual address 1 and the process ID1 corresponding to the target virtual address 1 that are carried in the first remote access packet, the mapping relationship set described in Table 2, to determine whether a target physical address that has a mapping relationship with the target virtual address 1 and the process ID1 exists in the mapping relationship set described in Table 2.

Any memory page carried in the first remote access packet is used as an example. When the destination host determines that a target physical address that has a mapping relationship with a target virtual address corresponding to the memory page exists in the mapping relationship set, the destination host performs S1072. When the destination host determines that the target physical address that has the mapping relationship with the target virtual address corresponding to the memory page does not exist in the mapping relationship set, the destination host performs S1073.

S1072: When the destination host determines that the target physical address that has the mapping relationship with the target virtual address corresponding to the memory page exists in the mapping relationship set, the destination host writes the memory page into the target physical address, to update a memory page stored in the target physical address.

Specifically, that any memory page carried in the first remote access packet is a first memory page is used as an example. When the destination host determines that a target physical address that has a mapping relationship with a target virtual address corresponding to the first memory page exists in the mapping relationship set, or if the to-be-migrated process includes a plurality of processes, when the destination host determines that a target physical address that has a mapping relationship with the target virtual address corresponding to the first memory page and a process ID of a process to which the first memory page belongs exists in the mapping relationship set, it indicates that a memory page has been stored in or written into the target virtual address in the memory of the to-be-restored process. In this case, the destination host writes the first memory page carried in the first remote access packet into the target physical address, to update a memory page that is of the to-be-restored process and that is originally stored in the target physical address. The target virtual address corresponding to the first memory page is a virtual address that is used to store the first memory page and that is in the memory of the to-be-migrated process.

S1073: When the destination host determines that the target physical address that has the mapping relationship with the target virtual address corresponding to the memory page does not exist in the mapping relationship set, the destination host writes the memory page into a first physical address, and records a mapping relationship between the first physical address and the target virtual address.

Specifically, that any memory page carried in the first remote access packet is the first memory page is used as an example. When the destination host determines that the target physical address that has the mapping relationship with the target virtual address corresponding to the first memory page does not exist in the mapping relationship set, or if the to-be-migrated process includes a plurality of processes, when the destination host determines that the target physical address that has the mapping relationship with the target virtual address corresponding to the first memory page and the process ID of the process to which the first memory page belongs does not exist in the mapping relationship set, it indicates that no memory page has been stored in/written into the target virtual address in the memory of the to-be-restored process. In other words, the target virtual address in the memory of the to-be-restored process is null.

In this case, the destination host writes the first memory page carried in the first remote access packet into a first physical address that has a mapping relationship with the target virtual address, where the first physical address is a physical address in the memory of the destination host.

Specifically, the destination host may initiate a write request for writing the first memory page into the target virtual address corresponding to the first memory page to the processor (or an operating system) of the destination host. Further, the processor (or the operating system) of the destination host writes the first memory page into free storage space in the local memory based on the write request, where a physical address of the storage space is the first physical address. In addition, the processor (or the operating system) of the destination host further establishes the mapping relationship between the first physical address and the target virtual address corresponding to the first memory page, or establishes, when the to-be-migrated process includes a plurality of processes, a mapping relationship between the first physical address, the target virtual address corresponding to the first memory page, and the process ID of the process to which the first memory page belongs. In this way, when the to-be-restored process subsequently needs to access the first memory page in the target virtual address, the to-be-restored process can access the first memory page from the first physical address based on the mapping relationship.

Further, in the mapping relationship set described above, the destination host further records the mapping relationship between the first physical address and the target virtual address corresponding to the first memory page, or records, when the to-be-migrated process includes a plurality of processes, the mapping relationship between the first physical address, the target virtual address corresponding to the first memory page, and the process ID of the process to which the first memory page belongs, to update the mapping relationship set.

Optionally, when the processor of the destination host performs an operation of updating the mapping relationship set, the processor (or the operating system) of the destination host directly records the mapping relationship in the mapping relationship set after establishing the mapping relationship.

Optionally, when the second component of the destination host performs an operation of updating the mapping relationship set, the processor (or the operating system) of the destination host returns the mapping relationship to the second component after establishing the mapping relationship. Then, the second component records the mapping relationship in the mapping relationship set described above.

In this way, by using S1071 to S1073, the destination host may write each memory page carried in each received remote access packet into the memory of the to-be-restored process.

In this way, according to the method provided in this embodiment of this application, during migration of the to-be-migrated process on the source host, in a process in which the source host sends the remote access packet to the destination host, each time the destination host receives one remote access packet sent by the source host, the destination host writes a memory page carried in the remote access packet into the memory of the to-be-restored process that has the same resource parameter, a same process tree structure, and the same running code as the to-be-migrated process. In other words, in a process in which each time the source host performs one copy operation and sends, to the destination host, a memory page written into the storage space of the first component through the current copy operation, each time the destination host receives one remote access packet sent by the source host, the destination host writes a memory page carried in the remote access packet into the memory of the to-be-restored process. It can also be understood that the source host copies and sends the memory page of the to-be-migrated process while the destination host restores the to-be-restored process. In this way, in a process in which the source host copies and sends the memory page of the to-be-migrated process, the destination host restores the to-be-restored process in real time based on the received memory page of the to-be-migrated process.

In addition, in a process in which the source host performs iterative copy operations for a plurality of times other than the last copy operation on the memory page of the to-be-migrated process, the to-be-migrated process runs normally. In this way, in the method in this embodiment of this application, the to-be-migrated process is migrated in real time during running of the to-be-migrated process. However, when the source host performs the copy operation for the last time, there are a small quantity of memory pages that need to be copied by the source host and that need to be sent to the destination host (referring to related descriptions in S104). Therefore, a time needed to finally restore the to-be-restored process by the destination host is short, so that the user does not feel stalling when the user uses the to-be-migrated process. In other words, the method provided in this embodiment of this application can implement process migration when the user is unaware of the process migration. The time needed to finally restore the to-be-restored process by the destination host is a time interval from a moment at which the source host freezes the to-be-migrated process when performing the copy operation for the last time to a moment at which the destination host completes writing of all memory pages on which the source host performs the copy operation for the last time and that are sent to the destination host into the memory of the to-be-restored process.

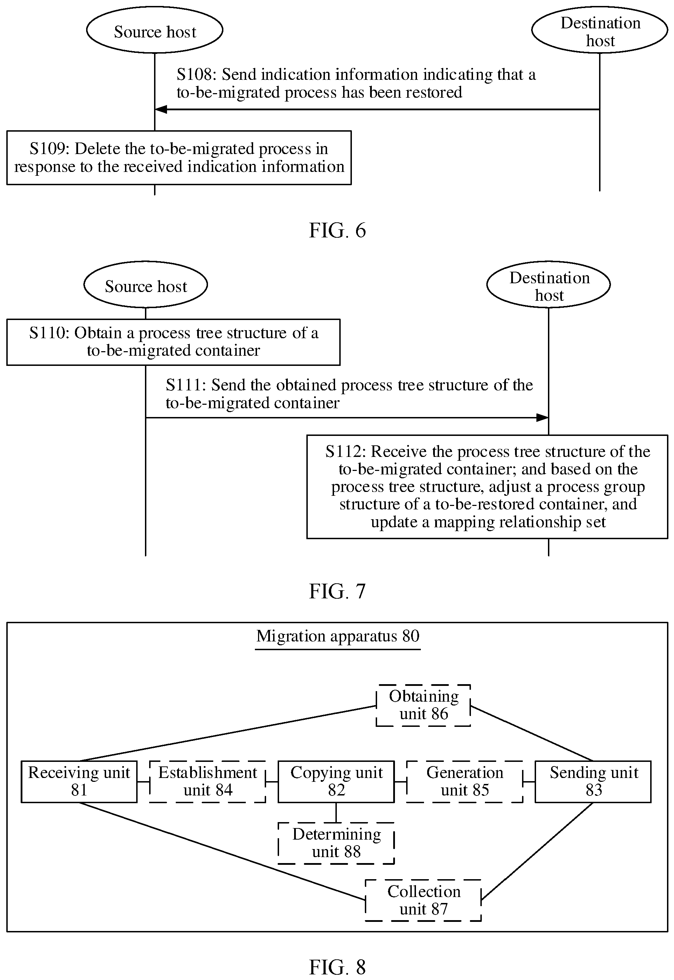

Optionally, in some other embodiments, with reference to FIG. 6, after S101 to S107 are performed to restore the to-be-migrated process on the destination host in this embodiment of this application, S108 may be further performed.

S108: The destination host sends, to the source host, the indication information indicating that the to-be-migrated process has been restored.

Specifically, after the destination host performs S107, when the destination host determines that the to-be-restored process can run normally, it indicates that the destination host has completed restoration of the to-be-migrated process.

In this case, the destination host sends, to the source host, the indication information indicating that the to-be-migrated process has been restored.

Optionally, the destination host may send, to the source host through the QP connection between the second component and the first component of the source host, the indication information indicating that the to-be-migrated process has been restored. Alternatively, the destination host may send, to the source host based on the address of the source host, the indication information indicating that the to-be-migrated process has been restored. This is not limited herein.

Optionally, when the destination host receives the second migration indication from the management node, the destination host further returns, to the management node, prompt information indicating that the to-be-migrated process has been migrated.

Optionally, the destination host may further output, to the user through an output interface of the destination host (for example, the output interface in the input/output interface 36 shown in FIG. 3), the prompt information indicating that the to-be-migrated process has been migrated. For example, the destination host outputs prompt information "a process 1 on the source host has been migrated to the destination host" through a display screen.

S109: The source host deletes the to-be-migrated process in response to the received indication information.

Optionally, when the source host receives the first migration indication from the management node, the source host further returns, to the management node, prompt information indicating that the to-be-migrated process has been migrated.

Optionally, the source host may further output, to the user through an output interface of the source host (for example, the output interface in the input/output interface 36 shown in FIG. 3), the prompt information indicating that the to-be-migrated process has been migrated. For example, the source host outputs prompt information "the local process 1 has been migrated to the destination host" through the display screen.

In this way, by using S108 and S109, the source host can release, in a timely manner, a resource occupied by the to-be-migrated process.

In some other embodiments, when the to-be-migrated process includes a plurality of processes and the plurality of processes are a plurality of processes (or referred to as a process group) for implementing the to-be-migrated container, for a plurality of processes in one container, the plurality of processes in the container have a structure of a specific connection relationship. In this case, with reference to FIG. 7, S110 to S112 may be further performed before S107 is performed in the method provided in this embodiment of this application.

S110: The source host obtains a process tree structure of the to-be-migrated container.

For detailed descriptions of the process tree structure, refer to the foregoing descriptions. Details are not described again.

Specifically, after receiving the first migration indication, in response to the first migration indication, the source host may trigger an operation of obtaining the process tree structure of the to-be-migrated container.

Optionally, each time before performing a copy operation on a memory page of each process in the to-be-migrated container, the source host may trigger an operation of obtaining the process tree structure of the to-be-migrated container.

A specific implementation in which the source host obtains the process tree structure of the to-be-migrated container is not limited in embodiments of this application. In an example, when triggering the operation of obtaining the process tree structure of the to-be-migrated container, the source host may collect, by using a file system (for example, a /proc file system), the process tree structure of the plurality of processes included in the to-be-migrated container at a current moment.

S111: The source host sends the obtained process tree structure of the to-be-migrated container to the destination host.

Optionally, the source host may send the process tree structure to the destination host through the QP connection between the first component and the second component of the destination host. Alternatively, the source host may send the process tree structure to the destination host based on the address of the destination host. This is not limited herein.

S112: The destination host receives the process tree structure that is of the to-be-migrated container and that is sent by the source host; and based on the process tree structure, adjusts a process group structure of the to-be-restored container, and updates the mapping relationship set.

It should be understood that, when the to-be-migrated container is a process group including a plurality of processes, the to-be-restored container is also a process group including a plurality of processes. After receiving the process tree structure that is of the to-be-migrated container and that is sent by the source host, the destination host may adjust the process group structure of the to-be-restored container based on the process tree structure, for example, modify a connection relationship between the processes in the to-be-restored container, newly add a process, or delete an existing process. This is not limited thereto.

Further, after adjusting the process group structure of the to-be-restored container, the destination host updates, based on an ID of each process and a memory page of each process in an adjusted process group structure, the mapping relationship set created in S103.

For example, for a deleted process, all mapping relationships related to a process ID of the process are deleted from the mapping relationship set. For another example, for a newly added process, a mapping relationship between a process ID of the newly added process and a virtual address and a physical address of an existing memory page of the newly added process is added to the mapping relationship set. This is not limited thereto.

In this way, performing S110 to S112 in the method provided in this embodiment of this application can ensure that the process group structure of the to-be-restored container in the destination host is exactly the same as a process group structure that is of the to-be-migrated container and that may change when the container runs normally in a migration process. Therefore, after the method provided in this embodiment of this application is performed, the container that is exactly the same as the to-be-migrated container can be obtained in the destination host when the user is unaware of the process migration. This implements live migration of the container, and improves user experience.

The following describes a process in which "the source host determines a dirty memory page generated by the to-be-migrated process during an interval".

In a possible case, when the source host performs a copy operation on the memory page of the to-be-migrated process via the process memory management module describe above, because the process memory management module is configured in the kernel of the operating system of the source host, the process memory management module can track a modification status of the memory page of the to-be-migrated process that is registered with the process memory management module.

In this case, the source host may directly determine, via the process memory management module, the dirty memory page generated by the to-be-migrated process during the interval described above.

In another possible case, when the source host performs a copy operation on the memory page of the to-be-migrated process based on the parasitic code implanted in the to-be-migrated process, the source host may read values of dirty page flags in a process memory file corresponding to the to-be-migrated process, to determine a dirty memory page generated by the to-be-migrated process during an interval between two consecutive copy operations.

Specifically, before performing the copy operation for the first time on the memory page of the to-be-migrated process based on the parasitic code implanted in the to-be-migrated process, the source host first sets the dirty page flags (for example, soft-dirty) in the process memory file corresponding to the to-be-migrated process to initial values. A specific value of the initial value is not limited herein, and may be 0, 1, or the like. This is not limited thereto.

The file system of the source host includes a process memory file corresponding to each process running on the source host. For any process running on the source host, for example, the to-be-migrated process, dirty page flags of all memory pages that can be stored in the memory of the to-be-migrated process are recorded in the process memory file corresponding to the to-be-migrated process. It should be understood that all the memory pages that can be stored in the memory of the to-be-migrated process herein are all memory pages that can be stored in the memory of the to-be-migrated process and that are theoretically determined based on the memory size of the to-be-migrated process.

Further, it can be learned from S104 that the to-be-migrated process runs normally during the interval from the time when the source host performs the 1^{st} copy operation on the memory page of the to-be-migrated process based on the parasitic code to the time when the source host starts to perform the 2^{nd} copy operation (that is, an interval from the time when the to-be-migrated process is unfrozen after the 1^{st} copy to the time when the to-be-migrated process is frozen during the 2^{nd} copy). During the interval, when the to-be-migrated process modifies a memory page in the memory of the to-be-migrated process, the source host sets, to a dirty page value, a dirty page flag that is corresponding to the modified memory page and that is in the process memory file corresponding to the to-be-migrated process. Herein, the memory page modified by the to-be-migrated process in the memory of the to-be-migrated process during the interval is a dirty memory page generated by the to-be-migrated process during the interval. The dirty page value is another value different from the initial value. For example, when the initial value is 0, the dirty page value may be 1.

In this way, when the source host performs the 2^{nd} copy operation on the memory page of the to-be-migrated process based on the parasitic code, the source host reads values of the dirty page flags in the process memory file corresponding to the to-be-migrated process, determines a memory page corresponding to a value of a dirty page flag being the dirty page value as the dirty memory page generated by the to-be-migrated process during the interval between the 1^{st} copy operation and the 2^{nd} copy operation, and further performs the current memory page copy operation. Details are not described.

For example, the source host may first obtain virtual memory area information by using a /proc/[pid]/smaps file and a /proc/[pid]/map_files file, to determine a virtual address range corresponding to the memory of the to-be-migrated process. Further, the source host parses, based on a memory page corresponding to the parsed virtual address range, a value of soft-dirty corresponding to each memory page in a /proc/[pid]/pagemap file, and determines a memory page corresponding to a value of soft-dirty being the dirty page value as the dirty memory page generated by the to-be-migrated process during the interval between the 1^{st} copy operation and the 2^{nd} copy operation.

Then, after the source host completes the 2^{nd} copy operation on the memory page of the to-be-migrated process based on the parasitic code, and before the to-be-migrated process is unfrozen, the source host resets all dirty page flags in the process memory file corresponding to the to-be-migrated process to the initial values. For example, the source host writes "4" into a /proc/[pid]/clear_refs file, to notify the kernel of the source host to reset soft-dirty in the process memory file corresponding to the to-be-migrated process, so that a dirty memory page is identified based on values of the dirty page flags during a next copy operation.

In this way, the source host reads the values of the dirty page flags in the process memory file corresponding to the to-be-migrated process, to determine the dirty memory page generated by the to-be-migrated process during the interval between the two consecutive copy operations.

To deepen understanding of the process migration methods provided in embodiments of this application, the following further describes the methods provided in embodiments of this application by using specific examples and by using an example in which the first component of the source host is a DPU 1 having an RDMA function, the second component of the destination host is a DPU 2 having an RDMA function, and the to-be-migrated process is a container 1 implemented by using a plurality of processes. Specifically, the method may include the following steps.

Step 1: The source host receives a first migration indication that indicates to migrate the container 1 running on the source host to the destination host.

For detailed descriptions, refer to S101. Details are not described again.

Step 2: The destination host receives a second migration indication that indicates to migrate the container 1 running on the source host to the destination host.

For detailed descriptions, refer to S102. Details are not described again.

Step 3: The source host obtains a process tree structure of the container 1 in response to the first migration indication, and sends the process tree structure of the container 1 to the destination host based on the identification information of the destination host carried in the migration indication.

For detailed descriptions, refer to S110 and S111. Details are not described again.

Step 4: The destination host creates a to-be-restored container based on the second migration indication and the process tree structure of the container 1, and records a mapping relationship set of the to-be-restored container.

For detailed descriptions, refer to S103 and S112. Details are not described again.

Step 5: The source host performs a 1^{st} copy operation on all memory pages of each process in the container 1.

For detailed descriptions, refer to S104. Details are not described again.

Step 6: The source host sends, to the destination host by using an RDMA packet, the memory page that is copied to storage space of the DPU 1 through the 1^{st} copy operation.

Step 7: The source host obtains a process tree structure of the container 1, and sends the process tree structure of the container 1 to the destination host.

For detailed descriptions, refer to S110 and S111. Details are not described again.

Step 8: The source host performs a 2^{nd} copy operation on all memory pages of each process in the container 1.

For detailed descriptions, refer to S104. Details are not described again.

Step 9: The source host sends, to the destination host by using an RDMA packet, the memory page that is copied to the storage space of the DPU 1 through the 2^{nd} copy operation.

For detailed descriptions, refer to S105. Details are not described again.

Step 10: Repeatedly perform step 7 to step 9 until a copy operation is performed for the last time on a dirty memory page generated by each process in the container 1.

For detailed descriptions, refer to S104 and S105. Details are not described again.

Step 11: The source host obtains running status information that is of the container 1 and that is present when the copy operation is performed for the last time on the dirty memory page generated by each process in the container 1, and sends the running status information to the destination host.

For detailed descriptions, refer to S104 and S105. Details are not described again.

Step 12: The DPU 2 of the destination host receives each RDMA packet sent by the source host in step 6 and step 9, and receives the running status information of the container 1 sent by the source host in step 11.

For detailed descriptions, refer to S106. Details are not described again.

Step 13: The destination host writes each received memory page into a memory of each process in the to-be-restored container in real time, and the destination host sets a running status of the to-be-restored container based on the received running status information.

For detailed descriptions, refer to S107. Details are not described again.

Step 14: The destination host sends, to the source host, indication information indicating that the container 1 has been restored.

For detailed descriptions, refer to S108. Details are not described again.

Step 15: The source host deletes the container 1 on the source host based on the received indication information.

For detailed descriptions, refer to S109. Details are not described again.

The foregoing mainly describes, from perspectives of the methods, the solutions provided in embodiments of this application.

To implement the foregoing functions, refer to FIG. 8. FIG. 8 is a diagram of a structure of a process migration apparatus 80 according to an embodiment of this application. The migration apparatus 80 is used for a source host running a to-be-migrated process, and the source host includes a first component provided with the remote access module described above. The migration apparatus 80 is configured to perform the foregoing process migration method, for example, perform the method shown in FIG. 4, FIG. 6, or FIG. 7. The migration apparatus 80 may include a receiving unit 81, a copying unit 82, and a sending unit 83.

The receiving unit 81 is configured to receive a first migration indication, where the first migration indication indicates to migrate the to-be-migrated process to a destination host. The copying unit 82 is configured to copy a memory page of the to-be-migrated process to storage space of the first component in response to the first migration indication. The sending unit 83 is configured to send the memory page of the to-be-migrated process to the destination host via the remote access module of the first component, where the memory page of the to-be-migrated process sent to the destination host is used to restore the to-be-migrated process on the destination host.

For example, with reference to FIG. 4, the receiving unit 81 may be configured to perform S101, the copying unit 82 may be configured to perform S104, and the sending unit 83 may be configured to perform S105.

Optionally, the copying unit 82 is specifically configured to copy the memory page of the to-be-migrated process to the storage space of the first component based on a mapping relationship between a virtual address of a memory of the to-be-migrated process and the storage space of the first component.

For example, with reference to FIG. 4, the copying unit 82 may be configured to perform S104.

Optionally, the migration apparatus 80 further includes an establishment unit 84. The establishment unit 84 is configured to: before the memory page of the to-be-migrated process is copied to the storage space of the first component, establish the mapping relationship between the virtual address of the memory of the to-be-migrated process and the storage space of the first component based on parasitic code implanted in the to-be-migrated process; or establish the mapping relationship between the virtual address of the memory of the to-be-migrated process and the storage space of the first component via a process memory management module configured in the source host, where the process memory management module is configured to manage a memory of a process that runs on the source host.

Optionally, the migration apparatus 80 further includes a generation unit 85. The generation unit 85 is configured to generate a remote access packet via the remote access module of the first component, where the remote access packet carries at least one memory page copied to the first component and a target virtual address of each of the at least one memory page in a memory of the to-be-migrated process. The sending unit 83 is specifically configured to send the generated remote access packet to the destination host via the remote access module of the first component.

Optionally, when the to-be-migrated process includes a plurality of processes, the generated remote access packet further includes a process ID of a process to which each of the at least one memory page belongs.

Optionally, the to-be-migrated process includes a plurality of processes, and the plurality of processes may be a process group for implementing a to-be-migrated container.

Optionally, the migration apparatus 80 further includes an obtaining unit 86. The obtaining unit 86 is configured to: before the memory page of the to-be-migrated process is copied to the first component, obtain a process tree structure of the to-be-migrated container. The sending unit 83 is further configured to send the process tree structure to the destination host.

For example, with reference to FIG. 7, the obtaining unit 86 may be configured to perform S110, and the sending unit 83 may be configured to perform S111.

Optionally, the migration apparatus 80 further includes a collection unit 87. The collection unit 87 is configured to collect running status information of the to-be-migrated process. The sending unit 83 is further configured to send, via the first component, a packet including the running status information to the destination host, where the running status information is used to set a running status of the migrated process.

Optionally, the copying unit 82 is specifically configured to copy the memory page of the to-be-migrated process to the first component through a plurality of times of iterative copying. When a copy operation is performed for the first time, all memory pages of the to-be-migrated process are copied to the first component. For any copy operation other than the 1^{st} copy operation, a dirty memory page generated by the to-be-migrated process during an interval is copied to the first component. Herein, the interval is a time interval from execution of a previous copy operation of a current copy operation to execution of the current copy operation.

For example, with reference to FIG. 4, the copying unit 82 may be configured to perform S104.

Optionally, the migration apparatus 80 further includes a determining unit 88. For any copy operation other than the 1^{st} copy operation, the determining unit 88 is configured to determine, based on a dirty page flag (for example, soft-dirty) of each memory page of the to-be-migrated process, the dirty memory page generated by the to-be-migrated process during the interval; or determine, via the process memory management module configured in the source host, the dirty memory page generated by the to-be-migrated process during the interval.

Optionally, the determining unit 88 is further configured to: when a quantity of dirty memory pages copied this time is less than or equal to a first threshold, or a quantity of times of iterative copy operations on the memory page of the to-be-migrated process is greater than or equal to a second threshold, determine to stop performing an iterative copy operation. In other words, it is determined that the current copy operation is a last copy operation performed on the memory page of the to-be-migrated process.

Optionally, a destination address of the remote access packet is a pre-obtained address of a receiving buffer in the destination host.

Optionally, the receiving buffer of the destination host is all or a part of storage space of a second component of the destination host.

Optionally, the receiving unit 81 is specifically configured to receive the first migration indication entered by a user; or receive the first migration indication sent by a management node of a cluster system in which the source host is located.

For example, with reference to FIG. 4, the receiving unit 81 may be configured to perform S101.

Optionally, when the first migration indication is a migration indication entered by the user, the determining unit 88 is further configured to determine the destination host based on the first migration indication after receiving the first migration indication. The sending unit 83 is further configured to send, to the destination host, a second migration indication that carries identification information of the source host.

Optionally, the remote access module is a module that supports an RDMA function.

Optionally, the first component provided with the remote access module is a network interface card or a DPU having an RDMA function.

For detailed descriptions of the foregoing optional manners, refer to the foregoing method embodiments. Details are not described herein again. In addition, for descriptions of any migration apparatus 80 provided above and descriptions of beneficial effects, refer to the foregoing corresponding method embodiments. Details are not described again.

For example, with reference to FIG. 3, a function implemented by the receiving unit 81 in the migration apparatus 80 may be implemented by the communication module 33 or the input/output interface 36 shown in FIG. 3. Functions implemented by the copying unit 82, the establishment unit 84, the obtaining unit 86, the collection unit 87, and the determining unit 88 may be implemented by the processor 31 in FIG. 3 by executing the program code in the storage 32 in FIG. 3. Functions implemented by the sending unit 83 and the generation unit 85 may be implemented by the remote access module 34 in FIG. 3.

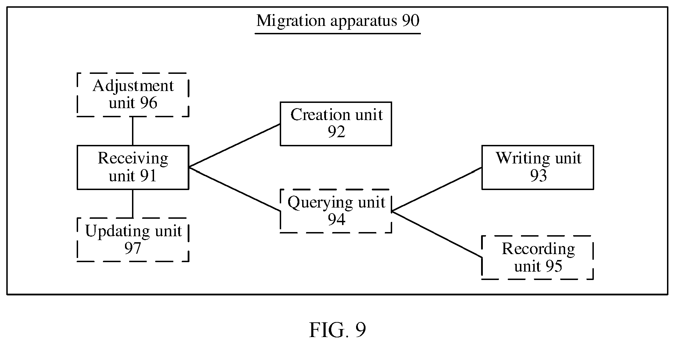

FIG. 9 is a diagram of a structure of a process migration apparatus 90 according to an embodiment of this application. The migration apparatus 90 is used for a destination host including a second component, and the second component is provided with the remote access module described above. The migration apparatus 90 is configured to perform the foregoing process migration method, for example, perform the method shown in FIG. 4, FIG. 5, FIG. 6, or FIG. 7. The migration apparatus 90 may include a receiving unit 91, a creation unit 92, and a writing unit 93.

The receiving unit 91 is configured to receive a second migration indication, where the second migration indication indicates to migrate a to-be-migrated process running on a source host to the destination host. The creation unit 92 is configured to create, based on the second migration indication, a to-be-restored process whose resource parameter is the same as a resource parameter of the to-be-migrated process. The receiving unit 91 is further configured to receive, via the remote access module of the second component, a memory page that is of the to-be-migrated process and that is sent by the source host. The writing unit 93 is configured to write the received memory page of the to-be-migrated process into a memory of the to-be-restored process, to restore the to-be-migrated process.

For example, with reference to FIG. 4, the receiving unit 91 may be configured to perform S102 and S106, the creation unit 92 may be configured to perform S103, and the writing unit 93 may be configured to perform S107.

Optionally, the receiving unit 91 is specifically configured to receive, via the remote access module of the second component, at least one remote access packet sent by the source host, where each remote access packet received by the destination host carries at least one memory page of the to-be-migrated process and a target virtual address of each of the at least one memory page in a memory of the to-be-migrated process.

For example, with reference to FIG. 4, the receiving unit 91 may be configured to perform S106.

Optionally, for a first remote access packet received by the destination host via the remote access module of the second component (that is, any remote access packet received by the destination host via the remote access module of the second component), the writing unit 93 is specifically configured to write a memory page carried in the first remote access packet into a target virtual address carried in the first remote access packet.

For example, with reference to FIG. 4, the writing unit 93 may be configured to perform S107.

Optionally, the migration apparatus 90 further includes a querying unit 94. The destination host includes a mapping relationship set, and the mapping relationship set includes a mapping relationship between a physical address and a virtual address that are used to store a memory page of the to-be-restored process. The querying unit 94 is configured to query the mapping relationship set, to determine whether a target physical address that has a mapping relationship with each target virtual address carried in the first remote access packet exists. The writing unit 93 is specifically configured to: when it is determined that the target physical address exists, write the memory page carried in the first remote access packet into the corresponding target physical address, to update a memory page originally stored in the target physical address.

For example, with reference to FIG. 5, the querying unit 94 may be configured to perform S1071, and the writing unit 93 may be configured to perform S1072.

Optionally, the migration apparatus 90 further includes a recording unit 95. The writing unit 93 is further specifically configured to: when it is determined that the target physical address does not exist, write the memory page carried in the first remote access packet into a first physical address, where the first physical address is a physical address in a memory of the destination host. The recording unit 95 is configured to record, in the mapping relationship set, a mapping relationship between the target virtual address carried in the first remote access packet and the first physical address.

For example, with reference to FIG. 5, the writing unit 93 and the recording unit 95 may be configured to perform S1073.

Optionally, when the to-be-migrated process includes a plurality of processes, the to-be-restored process includes a process that has a same process ID as each of the plurality of processes, and each remote access packet further carries a process ID of a process to which each of the at least one memory page belongs; and for a first process in the to-be-restored process, the mapping relationship set specifically includes a process ID of the first process and a mapping relationship between a virtual address and a physical address that are used to store a memory page of the first process.

Optionally, if the to-be-migrated process includes a plurality of processes, and the plurality of processes may be a process group for implementing a to-be-migrated container, the to-be-restored process is a process group of a to-be-restored container.

Optionally, the migration apparatus 90 further includes an adjustment unit 96 and an updating unit 97. The receiving unit 91 is further configured to receive a process tree structure that is of the to-be-migrated container and that is sent by the source host. The adjustment unit 96 is configured to adjust a process group structure of the to-be-restored container based on the received process tree structure. The updating unit 97 is configured to update the mapping relationship set based on the received process tree structure.

For example, with reference to FIG. 7, the receiving unit 91, the adjustment unit 96, and the updating unit 97 may be configured to perform S112.

Optionally, the receiving unit 91 is further configured to receive, via the second component, a packet that includes running status information of the to-be-migrated process and that is sent by the source host, where the running status information is used to set a running status of the to-be-restored process.

Optionally, the receiving unit 91 is further configured to receive the second migration indication sent by the source host; or receive the second migration indication sent by a management node of a cluster system in which the destination host is located.

For example, with reference to FIG. 4, the receiving unit 91 may be configured to perform S102.

For detailed descriptions of the foregoing optional manners, refer to the foregoing method embodiments. Details are not described herein again. In addition, for descriptions of any migration apparatus 90 provided above and descriptions of beneficial effects, refer to the foregoing corresponding method embodiments. Details are not described again.

For example, with reference to FIG. 3, functions implemented by the receiving unit 91 in the migration apparatus 90 may be implemented by the remote access module 34 shown in FIG. 3. Functions implemented by the creation unit 92, the writing unit 93, the querying unit 94, the recording unit 95, the adjustment unit 96, and the updating unit 97 may be implemented by the processor 31 in FIG. 3 by executing the program code in the storage 32 in FIG. 3. Alternatively, functions implemented by the querying unit 94, the recording unit 95, and the adjustment unit 96 may be implemented by a component (for example, a first component) including the remote access module 34 shown in FIG. 3.

An embodiment of this application further provides a process migration system, for example, the migration system shown in FIG. 1 or FIG. 2. The migration system includes a source host and a destination host. A to-be-migrated process runs on the source host in the migration system. The source host and the destination host in the migration system are configured to perform the process migration methods described above, to migrate the to-be-migrated process from the source host to the destination host.

A person skill in the art should be easily aware that, with reference to the examples described in embodiments disclosed in this specification, units and algorithm steps can be implemented by hardware or a combination of hardware and computer software in this application. Whether a function is performed by hardware or computer software driving hardware depends on particular applications and design constraints of the technical solutions. A person skilled in the art may use a different method to implement the described functions for each particular application, but it should not be considered that the implementation goes beyond the scope of this application.

It should be noted that division into modules in FIG. 8 and FIG. 9 is an example, is merely logical function division, and may be other division during actual implementation. For example, at least two functions may be integrated into one processing module. The integrated module may be implemented in a form of hardware, or may be implemented in a form of a software functional module.

An embodiment of this application further provides a computer program product and a computer-readable storage medium configured to store the computer program product. The computer program product may include one or more program instructions. When the one or more program instructions are run by one or more processors, the foregoing functions or some of the functions described with respect to FIG. 4, FIG. 5, FIG. 6, or FIG. 7 may be provided. Therefore, for example, one or more features in S101 to S107 in FIG. 4 may be implemented by using one or more instructions in the computer program product.

In some examples, the migration apparatus for performing the method described in FIG. 4, FIG. 5, FIG. 6, or FIG. 7 may be configured to provide various operations, functions, or actions in response to one or more program instructions stored in the computer-readable storage medium.

All or some of the foregoing embodiments may be implemented by using software, hardware, firmware, or any combination thereof. When a software program is used to implement the foregoing embodiments, all or some of the foregoing embodiments may be implemented in a form of a computer program product. The computer program product includes one or more computer instructions. When the computer executable instructions are executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A process migration method, applied to a source host running a to-be-migrated process, wherein the source host comprises a first component, the first component is provided with a remote access module, the remote access module is configured to perform data access on a remote host, and the method comprises:
receiving a first migration indication, wherein the first migration indication indicates to migrate the to-be-migrated process to a destination host;
copying a memory page of the to-be-migrated process to storage space of the first component in response to the first migration indication; and
sending the memory page of the to-be-migrated process to the destination host via the remote access module of the first component, wherein the memory page of the to-be-migrated process is used to restore the to-be-migrated process on the destination host.

2. The method according to claim 1, wherein copying the memory page of the to-be-migrated process to the storage space of the first component comprises:
copying the memory page of the to-be-migrated process to the storage space of the first component based on a mapping relationship between a virtual address of a memory of the to-be-migrated process and the storage space of the first component.

3. The method according to claim 2, wherein before copying the memory page of the to-be-migrated process to the storage space of the first component, the method further comprises:
establishing the mapping relationship based on parasitic code implanted in the to-be-migrated process; or
establishing the mapping relationship via a process memory management module, wherein the process memory management module is configured to manage a memory of a process that runs on the source host.

4. The method according to any one of claims 1 to 3, wherein sending the memory page of the to-be-migrated process to the destination host via the remote access module of the first component comprises:
generating a remote access packet via the remote access module of the first component, wherein the remote access packet carries at least one memory page copied to the first component and a target virtual address of each of the at least one memory page in a memory of the to-be-migrated process; and
sending the remote access packet to the destination host via the remote access module.

5. The method according to claim 4, wherein if the to-be-migrated process comprises a plurality of processes, the remote access packet further comprises a process identifier ID of a process to which each of the at least one memory page belongs.

6. The method according to any one of claims 1 to 5, wherein the to-be-migrated process comprises a plurality of processes, and the plurality of processes are a process group for implementing a to-be-migrated container.

7. The method according to claim 6, wherein before copying the memory page of the to-be-migrated process to the first component, the method further comprises:
obtaining a process tree structure of the to-be-migrated container; and
sending the process tree structure to the destination host.

8. The method according to any one of claims 1 to 7, wherein the method further comprises:
collecting running status information of the to-be-migrated process; and
sending, via the first component, a packet comprising the running status information to the destination host, wherein the running status information is used to set a running status of the migrated process.

9. A process migration method, applied to a destination host comprising a second component, wherein the second component is provided with a remote access module, the remote access module is configured to perform data access on a remote host, and the method comprises:
receiving a second migration indication, wherein the second migration indication indicates to migrate a to-be-migrated process running on a source host to the destination host;
creating a to-be-restored process based on the second migration indication, wherein a resource parameter of the to-be-restored process is the same as a resource parameter of the to-be-migrated process;
receiving, via the remote access module of the second component, a memory page that is of the to-be-migrated process and that is sent by the source host; and
writing the memory page of the to-be-migrated process into a memory of the to-be-restored process, to restore the to-be-migrated process.

10. The method according to claim 9, wherein receiving, via the remote access module of the second component, the memory page that is of the to-be-migrated process and that is sent by the source host comprises:
receiving, via the remote access module of the second component, at least one remote access packet sent by the source host, wherein each remote access packet carries at least one memory page of the to-be-migrated process and a target virtual address of each of the at least one memory page in a memory of the to-be-migrated process.

11. The method according to claim 10, wherein for a first remote access packet received via the remote access module of the second component, writing the memory page of the to-be-migrated process into the memory of the to-be-restored process comprises:
writing a memory page carried in the first remote access packet into a target virtual address carried in the first remote access packet.

12. The method according to claim 11, wherein the destination host comprises a mapping relationship set, and the mapping relationship set comprises a mapping relationship between a physical address and a virtual address that are used to store a memory page of the to-be-restored process; and writing the memory page carried in the first remote access packet into the target virtual address carried in the first remote access packet comprises:
querying the mapping relationship set, to determine whether a target physical address that has a mapping relationship with each target virtual address carried in the first remote access packet exists; and
when it is determined that the target physical address exists, writing the memory page carried in the first remote access packet into the target physical address, to update a memory page stored in the target physical address.

13. The method according to claim 12, wherein the method further comprises:
when it is determined that the target physical address does not exist, writing the memory page carried in the first remote access packet into a first physical address, wherein the first physical address is a physical address in a memory of the destination host; and
recording, in the mapping relationship set, a mapping relationship between the target virtual address carried in the first remote access packet and the first physical address.

14. The method according to claim 12 or 13, wherein when the to-be-migrated process comprises a plurality of processes, the to-be-restored process comprises a process that has a same process identifier ID as each of the plurality of processes, and each remote access packet further carries a process ID of a process to which each of the at least one memory page belongs; and for a first process in the to-be-restored process, the mapping relationship set specifically comprises a process ID of the first process and a mapping relationship between a virtual address and a physical address that are used to store a memory page of the first process.

15. The method according to any one of claims 9 to 14, wherein if the to-be-migrated process comprises a plurality of processes, and the plurality of processes are a process group for implementing a to-be-migrated container, the to-be-restored process is a process group of a to-be-restored container.

16. The method according to claim 15, wherein the method further comprises:
receiving a process tree structure that is of the to-be-migrated container and that is sent by the source host; and
based on the process tree structure, adjusting a process group structure of the to-be-restored container, and updating the mapping relationship set.

17. The method according to any one of claims 9 to 16, wherein the method further comprises:
receiving, via the second component, a packet that comprises running status information of the to-be-migrated process and that is sent by the source host, wherein the running status information is used to set a running status of the to-be-restored process.

18. A process migration apparatus, used for a source host running a to-be-migrated process, wherein the source host comprises a first component, the first component is provided with a remote access module, the remote access module is configured to perform data access on a remote host, and the apparatus comprises:
a receiving unit, configured to receive a first migration indication, wherein the first migration indication indicates to migrate the to-be-migrated process to a destination host;
a copying unit, configured to copy a memory page of the to-be-migrated process to storage space of the first component in response to the first migration indication; and
a sending unit, configured to send the memory page of the to-be-migrated process to the destination host via the remote access module of the first component, wherein the memory page of the to-be-migrated process is used to restore the to-be-migrated process on the destination host.

19. The apparatus according to claim 18, wherein
the copying unit is specifically configured to copy the memory page of the to-be-migrated process to the storage space of the first component based on a mapping relationship between a virtual address of a memory of the to-be-migrated process and the storage space of the first component.

20. The apparatus according to claim 19, wherein the apparatus further comprises:
an establishment unit, configured to: before the memory page of the to-be-migrated process is copied to the storage space of the first component, establish the mapping relationship based on parasitic code implanted in the to-be-migrated process; or establish the mapping relationship via a process memory management module, wherein the process memory management module is configured to manage a memory of a process that runs on the source host.

21. The apparatus according to any one of claims 18 to 20, wherein the apparatus further comprises a generation unit;
the generation unit is configured to generate a remote access packet via the remote access module of the first component, wherein the remote access packet carries at least one memory page copied to the first component and a target virtual address of each of the at least one memory page in a memory of the to-be-migrated process; and
the sending unit is specifically configured to send the remote access packet to the destination host via the remote access module.

22. The apparatus according to claim21, wherein if the to-be-migrated process comprises a plurality of processes, the remote access packet further comprises a process identifier ID of a process to which each of the at least one memory page belongs.

23. The apparatus according to any one of claims 18 to 22, wherein the to-be-migrated process comprises a plurality of processes, and the plurality of processes are a process group for implementing a to-be-migrated container.

24. The apparatus according to claim 23, wherein the apparatus further comprises an obtaining unit;
the obtaining unit is configured to: before the memory page of the to-be-migrated process is copied to the first component, obtain a process tree structure of the to-be-migrated container; and
the sending unit is further configured to send the process tree structure to the destination host.

25. The apparatus according to any one of claims 18 to 24, wherein the apparatus further comprises a collection unit;
the collection unit is configured to collect running status information of the to-be-migrated process; and
the sending unit is further configured to send, via the first component, a packet comprising the running status information to the destination host, wherein the running status information is used to set a running status of the migrated process.

26. A process migration apparatus, used for a destination host comprising a second component, wherein the second component is provided with a remote access module, the remote access module is configured to perform data access on a remote host, and the apparatus comprises:
a receiving unit, configured to receive a second migration indication, wherein the second migration indication indicates to migrate a to-be-migrated process running on a source host to the destination host;
a creation unit, configured to create a to-be-restored process based on the second migration indication, wherein a resource parameter of the to-be-restored process is the same as a resource parameter of the to-be-migrated process;
the receiving unit is further configured to receive, via the remote access module of the second component, a memory page that is of the to-be-migrated process and that is sent by the source host; and
a writing unit, configured to write the memory page of the to-be-migrated process into a memory of the to-be-restored process, to restore the to-be-migrated process.

27. The apparatus according to claim 26, wherein
the receiving unit is specifically configured to receive, via the remote access module of the second component, at least one remote access packet sent by the source host, wherein each remote access packet carries at least one memory page of the to-be-migrated process and a target virtual address of each of the at least one memory page in a memory of the to-be-migrated process.

28. The apparatus according to claim 27, wherein for a first remote access packet received via the remote access module of the second component,
the writing unit is specifically configured to write a memory page carried in the first remote access packet into a target virtual address carried in the first remote access packet.

29. The apparatus according to claim 28, wherein the apparatus further comprises a querying unit, the destination host comprises a mapping relationship set, and the mapping relationship set comprises a mapping relationship between a physical address and a virtual address that are used to store a memory page of the to-be-restored process;
the querying unit is configured to query the mapping relationship set, to determine whether a target physical address that has a mapping relationship with each target virtual address carried in the first remote access packet exists; and
the writing unit is specifically configured to: when it is determined that the target physical address exists, write the memory page carried in the first remote access packet into the target physical address, to update a memory page stored in the target physical address.

30. The apparatus according to claim 29, wherein the apparatus further comprises a recording unit;
the writing unit is further specifically configured to: when it is determined that the target physical address does not exist, write the memory page carried in the first remote access packet into a first physical address, wherein the first physical address is a physical address in a memory of the destination host; and
the recording unit is configured to record, in the mapping relationship set, a mapping relationship between the target virtual address carried in the first remote access packet and the first physical address.

31. The apparatus according to claim 29 or 30, wherein when the to-be-migrated process comprises a plurality of processes, the to-be-restored process comprises a process that has a same process identifier ID as each of the plurality of processes, and each remote access packet further carries a process ID of a process to which each of the at least one memory page belongs; and for a first process in the to-be-restored process, the mapping relationship set specifically comprises a process ID of the first process and a mapping relationship between a virtual address and a physical address that are used to store a memory page of the first process.

32. The apparatus according to any one of claims 26 to 31, wherein if the to-be-migrated process comprises a plurality of processes, and the plurality of processes are a process group for implementing a to-be-migrated container, the to-be-restored process is a process group of a to-be-restored container.

33. The apparatus according to claim 32, wherein the apparatus further comprises an adjustment unit and an updating unit;
the receiving unit is further configured to receive a process tree structure that is of the to-be-migrated container and that is sent by the source host;
the adjustment unit is configured to adjust a process group structure of the to-be-restored container based on the process tree structure; and
the updating unit is configured to update the mapping relationship set based on the process tree structure.

34. The apparatus according to any one of claims 26 to 33, wherein
the receiving unit is further configured to receive, via the second component, a packet that comprises running status information of the to-be-migrated process and that is sent by the source host, wherein the running status information is used to set a running status of the to-be-restored process.

35. A process migration apparatus, comprising a storage and one or more processors, wherein the one or more processors are configured to read program instructions stored in the storage, to perform the method according to any one of claims 1 to 8 or claims 9 to 17.

36. A process migration system, comprising a source host and a destination host, wherein a to-be-migrated process runs on the source host, the source host is configured to perform the method according to any one of claims 1 to 8, and the destination host is configured to perform the method according to any one of claims 9 to 17, to migrate the to-be-migrated process from the source host to the destination host.

37. A computer-readable storage medium, wherein the computer-readable storage medium comprises program instructions, and when the program instructions are run on a computer or a processor, the computer or the processor is enabled to perform the method according to any one of claims 1 to 8 or claims 9 to 17.
